# EUROPEAN PATENT APPLICATION

(11) **EP 4 769 136 A1**
(43) Date of publication of application: **01.07.2026**
(21) Application number: 25821002.0
(22) Date of filing: 13.05.2025
(51) Int. Cl.: G06F 9/451

(54) **APPLICATION STARTUP METHOD AND APPARATUS**

(30) Priority: 12.06.2024 CN 202410756789
(71) Applicant: Honor Device Co., Ltd., Shenzhen, Guangdong 518040 (CN)
(72) Inventor: CHEN, Xuhui, Shenzhen, Guangdong 518040 (CN)
(74) Representative: Goddar, Heinz J.
(86) International application number: PCT/CN2025/094703
(87) International publication number: WO 2025/256323

(57) **Abstract**

Embodiments of this application provide an application starting method and apparatus, and relate to the field of terminal technologies. The method includes: When an electronic device runs a first task of a first application in a background, the electronic device receives a first operation of enabling a first function by a user; in response to the first operation, the electronic device displays a first interface of a second application, and runs the first task in a first view of the first interface, where a first activity at a stack top of the first task corresponds to the first function, and the first task is a child node of the first view; and when the electronic device displays the first interface, the electronic device stops running the first task in the background, and runs the first task in a foreground. In this way, the first application is started in a task reusing manner, and a task of the first application is run in a view of the second application, thereby helping reduce display abnormality such as crash of an application caused by starting of the first application.

## Description

This application claims priority to Chinese Patent Application No. 202410756789.7, filed with the China National Intellectual Property Administration on June 12, 2024 and entitled "APPLICATION STARTING METHOD AND APPARATUS", which is incorporated herein by reference in its entirety.

### TECHNICAL FIELD

This application relates to the field of terminal technologies, and in particular, to an application starting method and apparatus.

### BACKGROUND

To improve running efficiency of an application, an electronic device may display a picture of a target application in a non-full-screen form, for example, a form of a floating window, or a form of embedding the picture of the target application into a target view of a window of another application.

When the picture of the target application is displayed in the form of embedding the picture of the target application into the target view, a user may not only manipulate the target application by using an input operation on the picture of the target application, but also manipulate the target application by using an input operation on another application, thereby providing the user with good operation experience. Currently, in an Android operating system, when the picture of the target application is embedded into the target view, the electronic device may create a new task (task), and start an activity of the target application in the newly created task. In this way, the electronic device may set a layer corresponding to the newly created task as a child node of a layer corresponding to the target view, so that the picture of the target application is displayed in the target view.

However, in such a method, display abnormality such as crash of some applications may occur.

### SUMMARY

Embodiments of this application provide an application starting method and apparatus, which are applied in the field of terminal technologies. A picture of a target application can be displayed in a window of another application in a task reusing manner, thereby helping reduce display abnormality such as crash of some applications caused by starting of the target application.

According to a first aspect, an embodiment of this application provides an application starting method. The method includes: When an electronic device runs a first task of a first application in a background, the electronic device receives a first operation of enabling a first function by a user; in response to the first operation, the electronic device displays a first interface of a second application, and runs the first task in a first view of the first interface, where a first activity at a stack top of the first task corresponds to the first function, and the first task is a child node of the first view; and when the electronic device displays the first interface, the electronic device stops running the first task in the background, and runs the first task in a foreground.

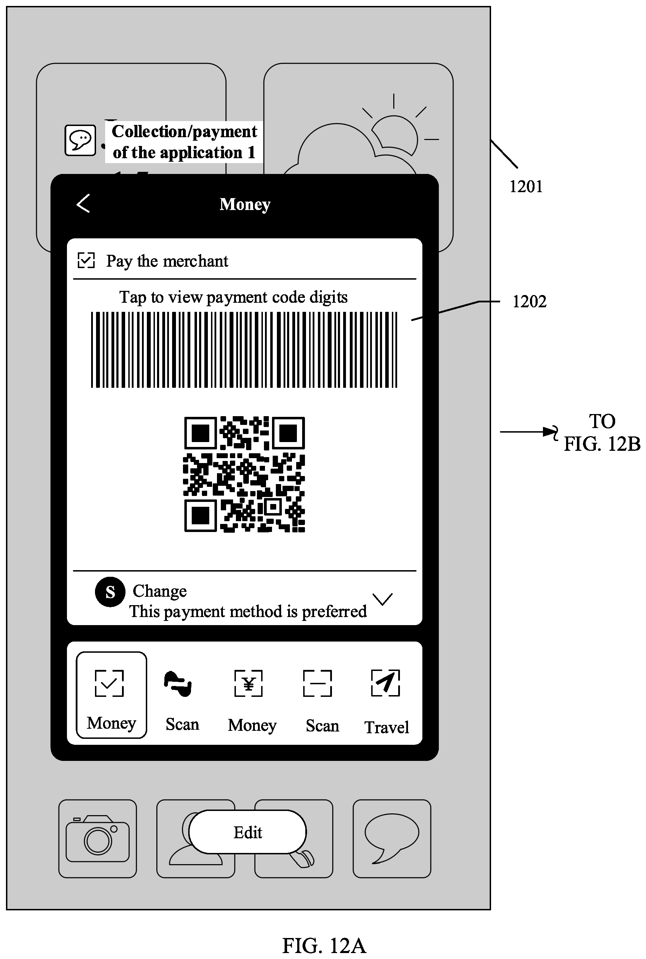

The first application may be a social application 1 in the following description, the first function may be a payment code function of the application 1, the first activity may be an activity a1 of the application 1, and the first task may be a task a-1 of the application 1. The second application may be a quick code display application in the following description, the first interface of the second application may be an interface in FIG. 12A, and the first view may be a view 1202 in the following description. The first operation may be an operation of enabling the first function of the first application by using the second application, for example, tapping a screen or double-tapping an icon of the quick code display application in the following description.

According to the application starting method in this application, because the first activity is started by reusing the first task running in the background, when the electronic device displays the first interface, the electronic device stops running the first task in the background. This can ensure that the electronic device does not simultaneously run first tasks of a plurality of first applications, so that a case in which the first activity exists separately in a plurality of first tasks may not occur, and the first activity may exist as a single instance. This can reduce display abnormality such as crash of the first application caused by a limitation that the first activity can only exist as a single instance.

With reference to the first aspect, in some implementations of the first aspect, the method further includes: When the electronic device displays the first interface, the electronic device receives a second operation of enabling a second function by the user; and in response to the second operation, the electronic device switches the first interface to a second interface of the second application, and runs the first task in a second view of the second interface, where a second activity at the stack top of the first task corresponds to the second function, and the first task is a child node of the second view.

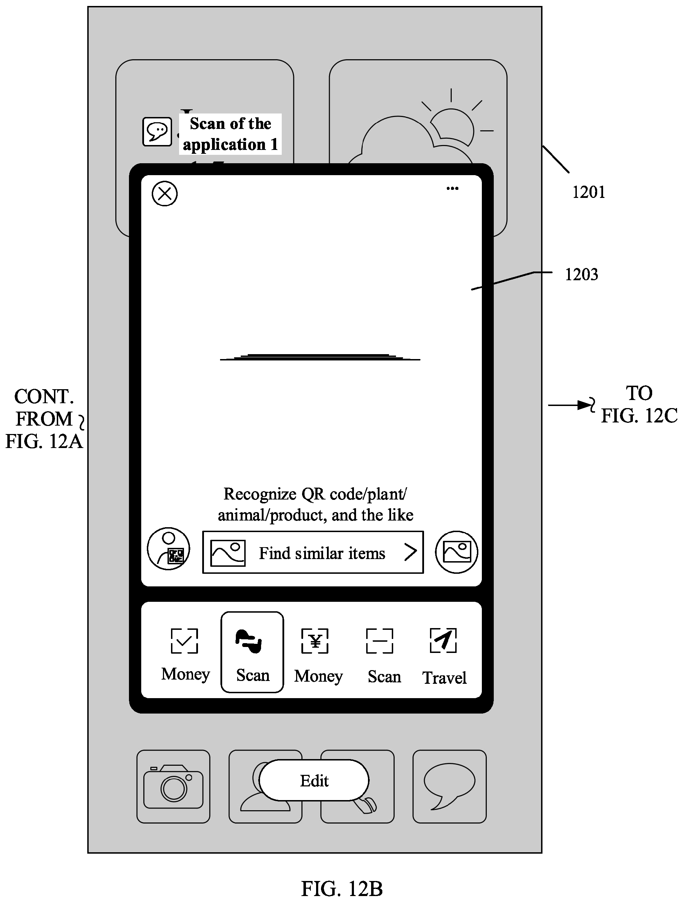

The second function may be a scan function of the application 1 in the following description, the second activity may be an activity a2 of the application 1, and the first task may be the task a-1 of the application 1. The second interface of the second application may be an interface in FIG. 12B, and the second view may be a view 1203. The first operation may be tapping a scan button or the like in the interface in FIG. 12A.

It should be understood that the second activity is started by reusing the first task running in the foreground when the electronic device displays the first interface. Compared with displaying the first interface by the electronic device, in the case of displaying the second interface by the electronic device, an activity at the stack top of the first task is updated from the first activity to the second activity, and the parent node of the first task is updated from the first view to the second view.

In this way, the electronic device may respectively display different pictures of the first application in different views of the second application.

With reference to the first aspect, in some implementations of the first aspect, the method further includes: When the electronic device runs the first task in the foreground, the electronic device runs a second task of a third application in the background; when the electronic device displays the first interface, the electronic device receives a third operation of enabling a third function by the user; in response to the third operation, the electronic device switches the first interface to a third interface of the second application, and runs the second task in a third view of the third interface, where a third activity at a stack top of the second task corresponds to the third function, and the second task is a child node of the third view; and when the electronic device displays the third interface, the electronic device stops running the second task in the background, and runs the second task in the foreground, and the electronic device runs the first task in the background.

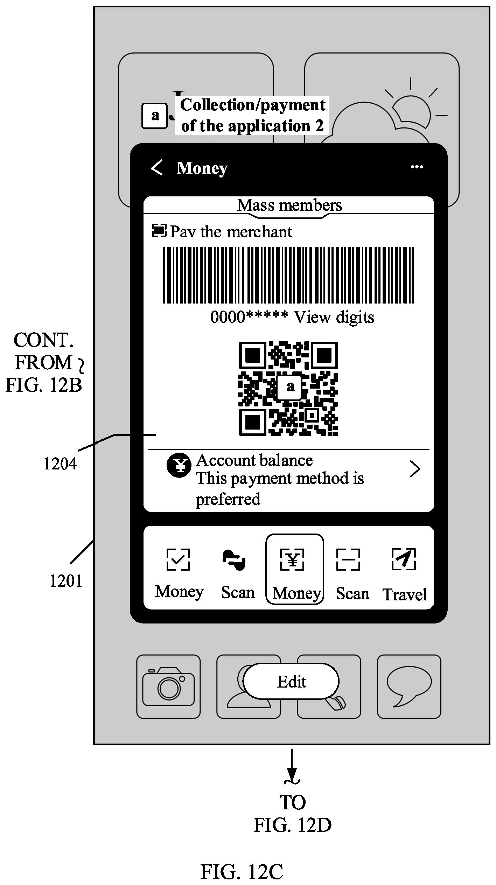

The third application may be a payment application 2 in the following description, the third function may be a payment code function of the application 2, the third activity may be an activity a3 of the application 2, and the second task may be a task a-2 of the application 2. The third interface of the second application may be an interface in FIG. 12C, and the third view may be a view 1204. The third operation may be enabling the third function of the third application by using the second application, for example, tapping an edit button in the interface in FIG. 12A and then selecting the payment code function of the application 2.

Optionally, when the electronic device displays the third interface, the first task may run in an embedded state or a non-embedded state in the background. When the first task runs in the embedded state in the background, the parent node of the first task is none. When the first task runs in the non-embedded state in the background, the parent node of the first task is a default task display area. In addition, when the first task runs in the non-embedded state in the background, the first task may run in the background in a form of full-screen display, or may run in the background in a form before the first task is reused. The form before the first task is reused is a form of the first task when the electronic device receives the first operation.

Optionally, when the electronic device displays the third interface, a display interface of the first task in the background may be an interface corresponding to the first function, or may be a display interface before the first task is reused. The display interface before the first task is reused is a display interface of the first task when the electronic device receives the first operation. The display interface of the first task may alternatively be understood as a display interface provided by the first task, an interface displayed by the electronic device by running the first task, or the like. For example, before the first task is reused, the display interface of the first task is a chat interface. The interface corresponding to the first function is a payment code interface. In this case, when the electronic device displays the third interface, the display interface of the first task in the background may be the chat interface, or may be the payment code interface.

It should be understood that the third activity is started by reusing the second task running in the background when the electronic device displays the first interface. Compared with displaying the first interface by the electronic device, in the case of displaying the second interface by the electronic device, the first task running in the first view is switched to the background for running, and the second task running in the background is switched to the foreground for running.

In this way, the electronic device may respectively display pictures of different applications in different views of the second application, so that running efficiency of the application is relatively high.

With reference to the first aspect, in some implementations of the first aspect, the method further includes: When the electronic device displays the first interface, the electronic device receives a fourth operation of disabling the first function by the user; in response to the fourth operation, the electronic device switches the first interface to a fourth interface; and when the electronic device displays the fourth interface, the electronic device runs the first task in the background in a form of full-screen display, and a parent node of the first task is updated from the first view to a default task display area.

The fourth operation may be tapping a blank area in a window 1201, tapping a return button above a view 1202, or the like in the interface in FIG. 12A.

In one case, the fourth interface may be an interface of the second application, and the fourth interface differs from the first interface in that the fourth interface does not display a picture corresponding to the first function, and a blank layer or a related view of the second application may be displayed in a rectangular area corresponding to the first view in the fourth interface. For example, the fourth interface may be that the window 1201 includes the view 1202, but the view 1202 does not display a picture corresponding to the payment code function of the application 1. For example, the view 1202 may display a blank layer or a related view of the quick code display application. To be specific, a difference from the interface in FIG. 12A lies in that the view 1202 displays a blank layer or a related view of the quick code display application.

In another case, the fourth interface may be an interface of another application, such as a home screen.

Optionally, when the electronic device displays the fourth interface, the electronic device may further run the first task in the background in another form. For example, the first task may run in the background in a form before the first task is reused. For example, the form before the first task is reused is a floating window form. In this case, when the electronic device displays the fourth interface, the electronic device runs the first task in the background in the floating window form.

It should be understood that, compared with displaying the first interface by the electronic device, in the case of displaying the fourth interface by the electronic device, the first task is switched from the foreground to the background for running, and the parent node of the first task is updated from the first view to the default task display area.

This ensures that the first task embedded into the first view may alternatively be switched in a non-embedded state to the background for running. In response to an operation of viewing a multi-task card by the user, the multi-task card may include a card of the first application, and the card of the first application is displayed by running the first task in the non-embedded state in the background. In addition, display content of the card of the first application may be the picture corresponding to the first function, for example, the picture corresponding to the payment code function of the application 1.

With reference to the first aspect, in some implementations of the first aspect, the method further includes: When the electronic device displays the first interface, the electronic device receives a fifth operation of disabling the second application by the user; in response to the fifth operation, the electronic device switches the first interface to a fifth interface; and when the electronic device displays the fifth interface, the electronic device runs the first task in the background, and a parent node of the first task is updated from the first view to none.

The fifth interface may be an interface of another application. For example, the fifth operation may be an operation of closing the second application by the user, for example, double-tapping a blank area in the window 1201, or tapping a button used to close the window 1201. The fifth interface may be a home screen or the like (for example, the home screen is displayed after the electronic device performs S1713). The fifth operation may alternatively be an operation of starting another application, such as an operation of tapping a notification message to start the another application. The another application is, for example, a shopping application. In this case, when the electronic device displays the first interface, if the electronic device displays a notification message of the shopping application above the first interface, the electronic device displays a fifth interface of the shopping application in response to an operation of tapping the notification message by the user.

It should be understood that, compared with displaying the first interface by the electronic device, in the case of displaying the fifth interface by the electronic device, the first task is switched from the foreground to the background for running, and the parent node of the first task is updated from the first view to none, that is, the first task still remains in the embedded state. In this case, in response to the operation of viewing the multi-task card by the user, the multi-task card may include a card of the first application running in the background (a card displayed by running the first task in the background). Because the first task is in the embedded state, the card of the first application may be different from a card of an application in a non-embedded state. For example, a size, a position, and/or the like of the card of the first application is different from that of the card of the application in the non-embedded state. The application in the non-embedded state means that a task of the application is in a non-embedded state.

Therefore, when the user closes the second application, the first task embedded into the first view may alternatively be switched in an embedded state to the background for running. This ensures that efficiency of embedding the first task into a view of another application by the electronic device next time may be relatively high.

With reference to the first aspect, in some implementations of the first aspect, the method further includes: When the electronic device runs the first task in the background, and the parent node of the first task is none, the electronic device receives a sixth operation of enabling a fourth function by the user; in response to the sixth operation, the electronic device displays a sixth interface of the first application in full screen by running the first task, where a fourth activity at the stack top of the first task corresponds to the fourth function, and the parent node of the first task is a default task display area; and when the electronic device displays the sixth interface, the electronic device stops running the first task in the background, and runs the first task in the foreground.

The sixth operation may be tapping an icon of the application 1 in S1714, and the fourth function may be a payment code function. In this case, the fourth activity may be an activity corresponding to the payment code function, for example, an activity a1 in the following description, and correspondingly, the sixth interface is an interface corresponding to the payment code function. Alternatively, the sixth operation may be an operation of sharing a link to a chat interface of the application 1 in a short video application, and the fourth function may be a chat function. In this case, the fourth activity may be an activity corresponding to the chat function, and correspondingly, the sixth interface is a chat interface. Alternatively, the sixth operation may be tapping a pop-up window of the application 1, and the fourth function may be a chat function. In this case, the fourth activity may be an activity corresponding to the chat function, and correspondingly, the sixth interface is a chat interface.

It should be understood that the fourth activity is started by reusing the first task running in the background. Compared with the electronic device running the first task in the background and the parent node of the first task being none, in the case of displaying the sixth interface by the electronic device, the first task is switched from the background to the foreground, and the parent node of the first task is switched from none to the default task display area. In addition, an activity at the stack top of the first task corresponds to the fourth function, and the fourth activity may be the first activity, or may be an activity of another first application.

In this way, when the first task runs in the embedded state in the background, in response to an operation of the user, the first task may alternatively be switched in the non-embedded state to the foreground for running.

Optionally, the sixth interface may alternatively be displayed in a form of a split screen or a floating window. For example, when the sixth operation indicates that the fourth function of the first application is started in a form of a split screen or a floating window, the electronic device may display the sixth interface in a form of a split screen or a floating window.

With reference to the first aspect, in some implementations of the first aspect, the method further includes: When the electronic device displays the first interface, the electronic device receives a seventh operation of enabling a fifth function by the user; in response to the seventh operation, the electronic device switches the first interface to a seventh interface of a fourth application, and runs the first task in a fourth view of the seventh interface, where a fifth activity at the stack top of the first task corresponds to the fifth function, and the first task is a child node of the fourth view; when the electronic device displays the seventh interface, the electronic device does not run the first task in the background, and the first task running in the first view when the electronic device displays the first interface runs in the fourth view.

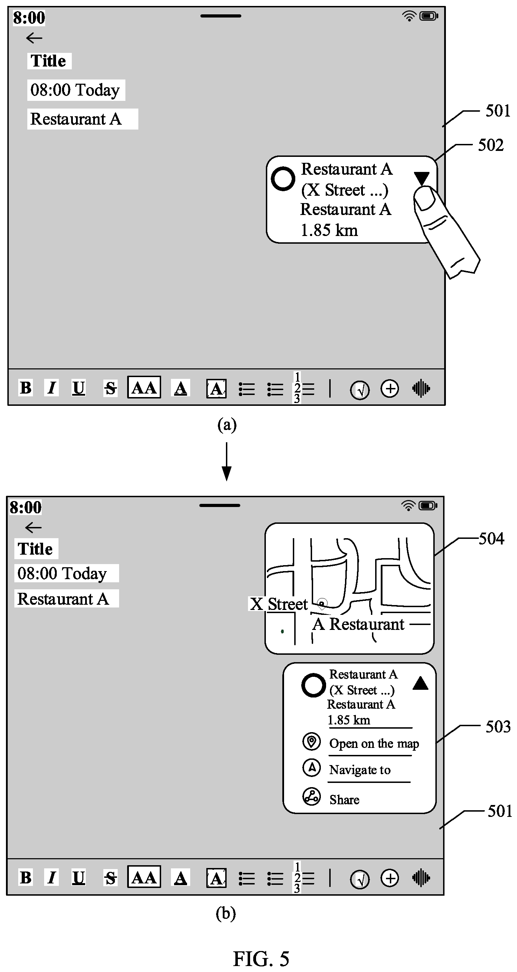

The fifth function may be a scan function of the application 1 in the following description, and the fifth activity may be an activity corresponding to the scan function of the application 1, for example, an activity a2 in the following description. The seventh operation may be an operation of enabling the scan function of the application 1 by using a smart assistant in the following description. The fourth application may be the smart assistant. The fourth view may be a view 505 in a method 1600. The seventh interface may be another interface that is in the method 1600 and that jumps from an interface in FIG. 12B. The seventh interface is similar to the interface (b) in FIG. 5, and the seventh interface differs from the interface (b) in FIG. 5 in that a window 501 displays a view 505, and the view 505 displays a picture corresponding to the scan function of the application 1 in FIG. 12A to FIG. 12F.

It should be understood that the seventh activity is started by reusing the first task running in the foreground. Compared with displaying the first interface by the electronic device, in the case of displaying the seventh interface by the electronic device, an activity at the stack top of the first task is a fifth activity, and the fifth activity may be the same as or different from the first activity. In addition, the parent node of the first task is updated from the first view to the fourth view.

In this way, the first task of the first application may be switched from a view embedded into the second application to a view embedded into the fourth application, that is, a picture of the first application may be embedded into different applications.

With reference to the first aspect, in some implementations of the first aspect, the first interface is displayed by the electronic device by running a fourth task of the second application; or the first interface is displayed in a first window, the first window is created by a service of the second application, and the service of the second application runs in the background of the electronic device.

The second application may be a quick code display application in the following description, and the fourth task may be a task b in the following description. The first window may be a window 1201 in the following description. The service of the second application may be started after the electronic device is powered on.

When the service of the second application runs in the background of the electronic device, the second application may run in the background for a long time, and may embed a picture of the first application into a view of the first window in response to an operation of the user in a timely manner.

With reference to the first aspect, in some implementations of the first aspect, that the electronic device displays a first interface of a second application, and runs the first task in a first view of the first interface includes: The electronic device creates a first window of the second application, and sets the first view in the first window, where the first interface is displayed in the first window; the electronic device sets the first task running in the background to run in the foreground, and starts the first activity in the first task; and sets the parent node of the first task to the first view.

In this way, the first task may run in the first view, and the electronic device may display the first interface.

It should be understood that the implementations of this solution are similar to implementations of S1401 to S1410. For details, refer to the following description.

With reference to the first aspect, in some implementations of the first aspect, that the electronic device sets the first task running in the background to run in the foreground includes: When first information is set in a first flag bit, the electronic device sets the first task running in the background to run in the foreground, where the first information is used to indicate to start the first activity in a task reusing manner.

The first flag bit may be an option 4 that is set in S1404, and the first information may be information used to indicate to start the activity a1 in a task reusing manner.

In this way, based on the first information, an activity task management module may start the first activity in a task reusing manner.

With reference to the first aspect, in some implementations of the first aspect, the method further includes: When the first task runs in the first view, the electronic device receives the second operation of enabling the second function by the user; in response to the second operation, the electronic device sets the second view in the first window, and removes the first view; the electronic device starts the second activity of the first application in the first task, where the second activity corresponds to the second function; and the electronic device sets the parent node of the first task to the second view from the first view.

In this way, the electronic device may start the second activity by reusing the first task running in the first view, and enable, by setting the parent node of the first task, the first task to run in the second view. This ensures that the electronic device may switch from the first interface to the second interface.

It should be understood that the implementations of this solution are similar to implementations of S1411 to S1422. For details, refer to the following description.

With reference to the first aspect, in some implementations of the first aspect, the method further includes: When the first task runs in the first view, the electronic device runs the second task of the third application in the background, and the electronic device receives the third operation of enabling the third function by the user; in response to the third operation, the electronic device sets the third view in the first window, and removes the first view; the electronic device sets the second task to run in the foreground, and starts the third activity of the third application in the second task, where the third activity corresponds to the third function; the electronic device sets the parent node of the first task to none, and returns the first task to the background for running; and the electronic device sets a parent node of the second task to the third view.

In this way, for the second application, running the first task of the first application in the first view is switched to running the second task of the third application in the third view. In addition, the first task of the first application is switched from running in the first view in the foreground to running in the embedded state in the background. The second task is switched from running in the background to running in the third view in the foreground. This ensures that the electronic device may switch from the first interface to the third interface.

It should be understood that the implementations of this solution are similar to implementations of S1501 to S1515. For details, refer to the following description.

With reference to the first aspect, in some implementations of the first aspect, the method further includes: When the first task runs in the first view, the electronic device receives the fourth operation of disabling the first function by the user; and in response to the fourth operation, the electronic device returns the first task to the background in a form of full-screen display for running, and sets the parent node of the first task to the default task display area from the first view.

In this way, the electronic device may run the first task in a non-embedded state in the background. This ensures that the electronic device may switch from the first interface to the fourth interface, and the first task may run in the background in a form of full-screen display.

It should be understood that the implementations of this solution are similar to implementations of S1701 to S1705 (or S1701 to S1708). For details, refer to the following description.

With reference to the first aspect, in some implementations of the first aspect, the method further includes: When the first task runs in the first view, the electronic device receives the fifth operation of disabling the second application by the user; and in response to the fifth operation, the electronic device returns the first task to the background for running, and sets the parent node of the first task to none from the first view.

In this way, the electronic device may close the second application, and may run the first task in an embedded state in the background. This ensures that the electronic device may switch from the first interface to the fifth interface, and in response to an operation of viewing the multi-task card by the user, the electronic device may display the card of the first application, where the card of the first application is displayed by running the first task in the embedded state in the background.

It should be understood that the implementations of this solution are similar to implementations of S 1709 to S1713. For details, refer to the following description.

With reference to the first aspect, in some implementations of the first aspect, the method further includes: When the electronic device runs the first task in the background, and the parent node of the first task is none, the electronic device receives the sixth operation of enabling the fourth function by the user; and in response to the sixth operation, the electronic device sets the first task running in the background to run in the foreground, starts the fourth activity of the first application in the first task, where the fourth activity corresponds to the fourth function, and sets the parent node of the first task to the default task display area from none.

In this way, the electronic device may switch the first task running in the embedded state in the background to the foreground in the non-embedded state for running. This ensures that the electronic device may switch from the first interface to the sixth interface. In addition, in response to an operation of viewing the multi-task card by the user, the electronic device may display the card of the first application, where the card of the first application is displayed by running the first task in the non-embedded state in the foreground.

It should be understood that the implementations of this solution are similar to implementations of S 1714 to S 1721. For details, refer to the following description.

With reference to the first aspect, in some implementations of the first aspect, the method further includes: When the first task runs in the first view, the electronic device receives the seventh operation of enabling the fifth function by the user; in response to the seventh operation, the electronic device creates a second window of the fourth application, and sets the fourth view in the second window; the electronic device starts the fifth activity of the first application in the first task, where the fifth activity corresponds to the fifth function; the electronic device removes the first window; and the electronic device sets the parent node of the first task to the fourth view from the first view.

The second window may be a window 501 in the following description, and the fourth view may be a view 505 disposed in the window 501.

In this way, the electronic device may switch the first task from running in a view of the second application to running in a view of the fourth application, that is, an interface of the first application may be embedded into views of different applications. This ensures that the electronic device may switch from the first interface to the seventh interface.

It should be understood that the implementations of this solution are similar to implementations of S1601 to S1612. For details, refer to the following description. According to a second aspect, an embodiment of this application provides an application starting apparatus. The apparatus may be an electronic device, or may be a chip or a chip system in the electronic device. The application starting apparatus may include a data display unit and a processing unit. When the application starting apparatus is an electronic device, the display unit may be a display screen, and the processing unit may be a processor. The application starting apparatus may further include a storage unit, and the storage unit may be a memory. The storage unit is configured to store instructions, and the processing unit executes the instructions stored in the storage unit, so that the electronic device is enabled to implement the object identification method according to any one of the first aspect or the possible implementations of the first aspect. When the application starting apparatus is the chip or the chip system in the electronic device, the processing unit may be a processor. The processing unit executes the instructions stored in the storage unit, so that the electronic device is enabled to implement the application starting method according to any one of the first aspect or the possible implementations of the first aspect. The storage unit may be a storage unit (for example, a register or a cache) in the chip or a storage unit (for example, a read-only memory or a random access memory) that is in the electronic device and that is located outside the chip.

For example, the processing unit is configured to generate a first interface, and the display unit is configured to display the first interface.

According to a third aspect, an embodiment of this application provides an electronic device, including a processor and a memory. The memory is configured to store code instructions, and the processor is configured to run the code instructions, to perform the method according to any one of the first aspect or the possible implementations of the first aspect.

According to a fourth aspect, an embodiment of this application provides a computer-readable storage medium. The computer-readable storage medium stores a computer program or instructions. When the computer program or the instructions are run on a computer, the computer is enabled to perform the method according to any one of the first aspect or the possible implementations of the first aspect.

According to a fifth aspect, an embodiment of this application provides a computer program product including a computer program. When the computer program is run on a computer, the computer is enabled to perform the method according to any one of the first aspect or the possible implementations of the first aspect.

According to a sixth aspect, this application provides a chip or a chip system. The chip or the chip system includes at least one processor and a communication interface. The communication interface and the at least one processor are interconnected through a line. The at least one processor is configured to run a computer program or instructions to perform the method according to any one of the first aspect or the possible implementations of the first aspect. The communication interface in the chip may be an input/output interface, a pin, a circuit, or the like.

In a possible implementation, the chip or the chip system described above in this application further includes at least one memory, and the at least one memory stores instructions. The memory may be a storage unit, for example, a register or a cache, inside the chip, or may be a storage unit (for example, a read-only memory or a random access memory) of the chip.

It should be understood that technical solutions of the second aspect to the sixth aspect of this application correspond to those of the first aspect of this application, and beneficial effects achieved in these aspects and corresponding feasible implementations are similar. Details are not described again.

### BRIEF DESCRIPTION OF DRAWINGS

FIG. 1 is a schematic diagram used to display a picture corresponding to an activity;
FIG. 2 is a schematic diagram of a process of a task management activity;
FIG. 3 is a schematic diagram of displaying a layer of an activity;
FIG. 4 is a schematic diagram of a process of starting an activity in a task reusing manner;
FIG. 5 is a schematic diagram of an interface for embedding an application a into a target window;
FIG. 6 is a schematic diagram of another interface for embedding an application a into a target window;
FIG. 7 is a schematic diagram of a process of embedding a task a into a view 1 in a task creation manner;
FIG. 8A and FIG. 8B are schematic diagrams of a multi-task card;
FIG. 9 is a schematic flowchart of embedding a task a into a view 1 in a task creation manner, and unembedding the task a from the view 1;
FIG. 10 is a schematic diagram of a process of embedding a task a into a view 1 in a task reusing manner according to an embodiment of this application;
FIG. 11A and FIG. 11B are schematic diagrams of a multi-task card according to an embodiment of this application;
FIG. 12A to FIG. 12F are schematic diagrams of an interface for embedding another application into a window of a quick code display application according to an embodiment of this application;
FIG. 13 is a schematic block diagram of a software architecture of an electronic device according to an embodiment of this application;
FIG. 14A and FIG. 14B are schematic flowcharts of a first application starting method according to an embodiment of this application;
FIG. 15A and FIG. 15B are schematic flowcharts of a second application starting method according to an embodiment of this application;
FIG. 16 is a schematic flowchart of a third application starting method according to an embodiment of this application;
FIG. 17A and FIG. 17B are schematic flowcharts of unembedding an application 1 from a window of a quick code display application according to an embodiment of this application;
FIG. 18 is a schematic block diagram of a hardware architecture of an electronic device according to an embodiment of this application; and
FIG. 19 is a schematic block diagram of a hardware architecture of an application starting apparatus according to an embodiment of this application.

### DESCRIPTION OF EMBODIMENTS

To clearly describe the technical solutions in the embodiments of this application, the following briefly describes some terms and technologies used in the embodiments of this application.

### 1. Window (window)

A window refers to a drawable and interactive rectangular area on a screen of an electronic device. The window has features of being capable of accepting an input and outputting an image, and occupying a rectangular area. The rectangular area occupied by the window is a range of the window. An image drawn by the electronic device may be displayed in the range of the window. The user may interact with the electronic device based on the image displayed in the range of the window. For example, the range of the window includes a control 1, and the user may tap the control 1, so that the electronic device executes logic corresponding to the control 1.

### 2. View (view)

A view may also be referred to as a surface view (surface view) or a control. The view may refer to a rectangular area in a window. One view may correspond to one rectangular area in one window. The view is used to perform drawing and event management on the rectangular area corresponding to the view. A visual layer may be drawn in the rectangular area corresponding to the view, and the visual layer drawn in the rectangular area corresponding to the view may also be referred to as a layer corresponding to the view.

### 3. Relationship between a window and a view

One view tree (viewroot) may be laid out in one window. The view tree may be a view or a view group, and the view group is a plurality of views. Therefore, one or more views may be laid out in one window. When a plurality of views are laid out in one window, the plurality of views may be completely overlapped, partially overlapped, or completely not overlapped. In addition, a tree relationship may or may not exist between the plurality of views.

### 4. Activity (activity)

An activity may also be referred to as an activity component or the like, and refers to a component of an Android (Android) application. One Android application may include one or more activities. An application developer may set one view tree for each activity, and the view tree is one or more views. One or more views corresponding to one activity may be set in a window of the activity. Visual content, such as a control, may be drawn in each view corresponding to one activity, and the user may interact with the electronic device by using the visual content in the view. Alternatively, it may be understood that a visual layer may be drawn in each view of one or more views corresponding to one activity, and these layers form an interface visible to the user. The interface visible to the user may also be referred to as a picture corresponding to the activity.

It should be understood that in this embodiment of this application, the interface may also be referred to as a picture. This is not specifically limited in this application.

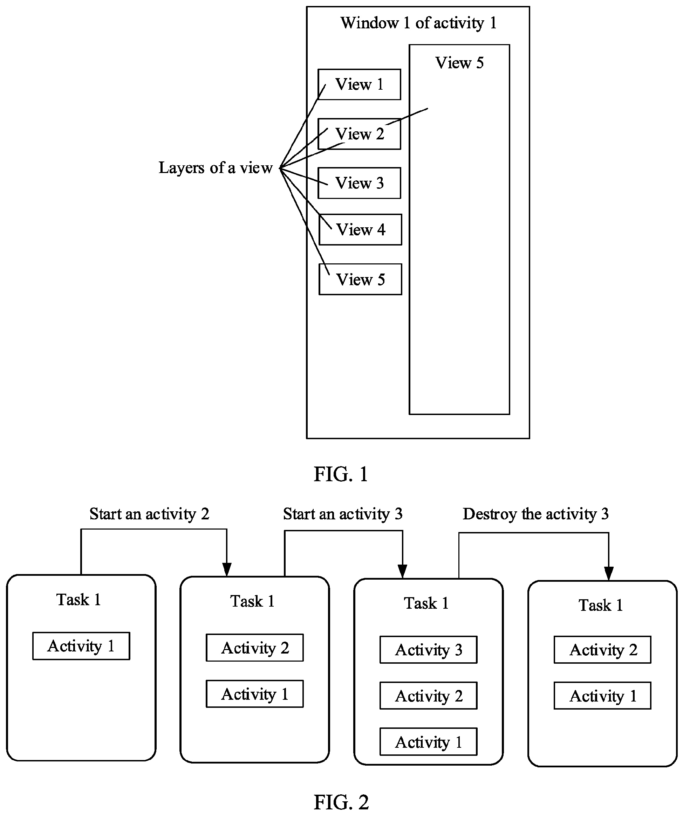

For example, as shown in FIG. 1, views corresponding to an activity 1 include a view 1, a view 2, a view 3, a view 4, and a view 5, and the views corresponding to the activity 1 are disposed in a window 1 of the activity 1. A picture corresponding to the activity 1 includes controls in the view 1, the view 2, the view 3, the view 4, and the view 5. These controls may respectively correspond to different layers, and these layers form a picture visible to the user.

It should be understood that, for brevity, one or more views that are set by the application developer for one activity in the following description are referred to as views of the activity.

### 5. Relationship among an activity, a window, and a view

To manage a view of each activity, the electronic device may create a window for a started activity. In this way, a view of the activity may be disposed in the window, and the view of the activity may be understood as a child node of the window.

### 6. Task (task) and activity stack (activity stack)

In a process of running one application, the electronic device may invoke one or more activities to meet a user requirement. A task may be understood as one or more activities that the electronic device interacts with the user when the user performs an operation in one application. The one or more activities are arranged in the activity stack in an opening order. Alternatively, it may be understood that the task is a set of one or more activities that are formed in a stack mode.

When one task includes a plurality of activities, there is a front-rear association between the plurality of activities, or it may be understood that the task manages the plurality of activities according to a last in first out rule. To be specific, an activity latest added to the task is located at the stack top, and the electronic device may display visual content in one or more views of the activity located at the stack top, so that the user can interact with the activity located at the stack top. When receiving an input operation of the user, for example, a return operation, the electronic device may destroy the activity located at the stack top, and display a picture corresponding to a next activity located at the stack top, so that the user can interact with the next activity located at the stack top until no activity exists in the task, and the task ends.

For example, as shown in FIG. 2, an input operation 1 of the user is detected, and the input operation 1 is used to start the activity 1 of the application 1. In response to the input operation 1, the electronic device pushes a task 1 to the foreground or creates a new task 1, and starts the activity 1 in the task 1. The activity 1 may be, for example, a main activity of the application 1, that is, a picture corresponding to the activity 1 is a main interface of the application 1. In response to an input operation 2 of the user in a picture corresponding to the activity 1, the activity 1 starts an activity 2, the electronic device pushes the activity 2 to the stack top, and the activity 2 obtains a focus. In addition, the activity 1 remains in the stack, and the activity 1 retains a state of a picture corresponding to the activity 1. In response to an input operation 3 of the user in a picture corresponding to the activity 2, the activity 2 starts an activity 3, the electronic device pushes the activity 3 to the stack top, and the activity 2 retains a state of a picture corresponding to the activity 2.

In response to an input operation 4 of the user in a layer corresponding to the activity 3, where the input operation 4 indicates to return to a previous layer, the activity 3 located at the stack top is ejected from the stack top and is destroyed. The electronic device pushes the activity 2 to the stack top, and the electronic device displays the state that is retained by the activity 2 and that is of the picture corresponding to the activity 2.

For example, the application 1 is an email, and the activity 1 may be used to display a new mail list. After the user selects a new mail from the new mail list, the electronic device starts the activity 2, and the activity 2 is used to display the new mail. After finishing viewing the new mail, the user may tap the return button, and then the electronic device may display the new mail list corresponding to the activity 1.

It should be noted that in this embodiment of this application, the electronic device may start the activity by invoking onCreate(), for example, start the activity 2 by invoking onCreate(); may stop the activity by invoking onPause(), for example, in the case of starting the activity 3, stop the activity 2 by invoking onPause(); and may destroy the activity by invoking onDestroy(), for example, destroy the activity 3 by invoking onDestroy(). Herein, onCreate(), onPause(), and onDestroy() may be understood as callbacks provided by activity classes, or may be understood as functions or methods. This is not specifically limited in this application.

### 7. Relationship between a task and an activity

One or more activities included in the task are child nodes of the task, and the task is a parent node of the one or more activities.

As can be seen from the foregoing description of a task, when a task of an application program runs in the foreground, the user can interact with an activity at the stack top of the task. To be specific, an interface displayed by the electronic device may be a picture corresponding to the activity at the stack top of the task.

The interface displayed by the electronic device may be formed by a plurality of layers. Therefore, from a perspective of the interface displayed by the electronic device, the electronic device runs one task in the foreground, and the user may interact with an activity at the stack top of the task, which may be finally embodied by using a layer. In other words, a relationship between a task and an activity and a relationship between an activity and a view may be finally embodied in a relationship among a layer of the task, a layer of the activity, and a layer of the view. Therefore, by setting the relationship among a layer of the task, a layer of the activity, and a layer of the view, the electronic device may display a picture corresponding to an activity at the stack top of the task running in the foreground.

Therefore, the following describes the relationship among a layer of the task, a layer of the activity, and a layer of the view. The layer of the view is a visual layer drawn in the view. The layer of the activity is a layer created by the electronic device for the activity. The layer of the task is a layer created by the electronic device for the task. The layer of the activity and the layer of the task may be transparent layers.

### 8. Relationship among a layer of the task, a layer of the activity, and a layer of the view

The layer of the view is a child node of the layer of the activity, and the layer of the activity is a child node of the layer of the task.

Therefore, a change in a state of the layer of the task may cause a change in a state of the layer of the activity, and the change in the state of the layer of the activity may cause a change in a state of the layer of the view. The state change includes but is not limited to a size and a position of the layer.

It should be understood that the relationship among a layer of the task, a layer of the activity, and a layer of the view in the foregoing description is described on a premise of the following condition: The activity is in the task, and the view is a view of the activity. For brevity, details are not described again in the following description.

As described above, when the electronic device runs a task in the foreground, an interface displayed by the electronic device is actually a picture corresponding to an activity at a stack top of the task. The following describes this case from a perspective of a layer.

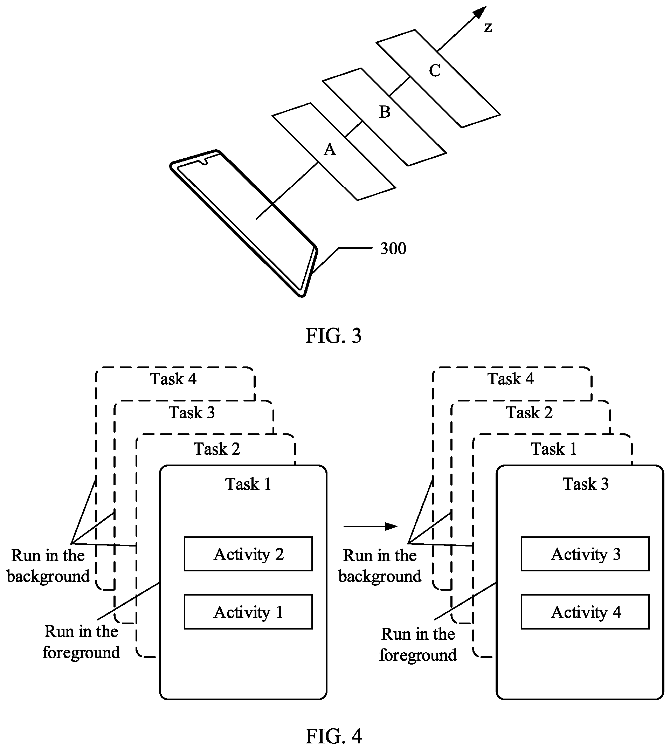

For example, as shown in FIG. 3, it is assumed that an electronic device 300 runs a task 1 of an application a in a foreground. The task 1 includes an activity A, an activity B, and an activity C. In addition, in the task 1, the activity C is located at a stack top, the activity B is located under the activity C, and the activity A is located under the activity B. One or more views corresponding to the activity A are views A, one or more views corresponding to the activity B are views B, and one or more views corresponding to the activity C are views C.

From a perspective of a layer, a layer of the activity A, a layer of the activity B, and a layer of the activity C are child nodes of a layer of the task 1. In the task 1, the activity C is located at the stack top, the activity B is located under the activity C, and the activity A is located under the activity B, so that the layer of the activity C is located above the layer of the activity B, and the layer of the activity B is located above the layer of the activity A.

Because a layer of a view A is a child node of the layer of the activity A, a layer of a view B is a child node of the layer of the activity B, a layer of a view C is a child node of the layer of the activity C, and a position of a child node is affected by a position of a parent node. Therefore, the layer of the view C is located above the layer of the view B, and the layer of the view B is located above the layer of the view A. This ensures that the interface displayed by the electronic device 300 includes the layer of the view C, that is, a picture corresponding to the activity C.

It should be understood that, in this embodiment of this application, one layer being located above another layer may alternatively be understood that the layer covers or overlaps the another layer. For example, the electronic device may set a vertical positional relationship of the layer by using a Z-order (Z-Order) parameter of the layer. The Z-Order parameter may be understood as coordinates of the layer on a Z-axis. The Z-axis may be an axis that is perpendicular to a display screen of the electronic device and that points from a back side of the electronic device to the display screen of the electronic device. When one layer is located above another layer, the electronic device may set a Z-Order parameter of the layer to be greater than a Z-Order parameter of the another layer, so that the layer covers the another layer. For example, with reference to FIG. 2, a Z-Order parameter of a layer corresponding to the activity C may be greater than a Z-Order parameter of a layer corresponding to the activity B. The Z-Order parameter of the layer corresponding to the activity B may be greater than a Z-Order parameter of a layer corresponding to the activity A.

The electronic device may start the activity in two manners, namely, a task reusing manner and a task creation manner. The following describes the task creation manner and the task reusing manner.

### 9. Task creation manner

This manner may mean that the electronic device creates a task to start a target activity, and starts the target activity in the created task. For example, in response to an input operation used to indicate to start an activity 1, the electronic device creates a task 1 and starts the activity 1 in the task 1. The activity 1 belongs to the application 1, and the input operation used to indicate to start the activity 1 may be, for example, tapping an icon of the application 1.

### 10. Task reusing manner

This manner may mean that the electronic device starts a target activity by reusing a target task that is running in the background. To be specific, the electronic device may adjust the target task running in the background to the foreground, and start the target activity in the target task. The target task may be a task that has the same task affinity (task affinity) as the target activity.

When the target task runs in the background, the target task may include one or more activities. The one or more activities may or may not include the target activity. When the one or more activities include the target activity, the electronic device starts the target activity in the target task in the following manner: adjusting the target task to the foreground for running, and disposing the target activity in the target task at a stack top. When the one or more activities do not include the target activity, the electronic device starts the target activity in the target task in the following manner: adjusting the target task to the foreground for running, and starting the target activity in the target task.

It should be understood that the task affinity may also be referred to as affinity or degree of affinity. An attribute of each activity in the electronic device may include affinity, and an attribute of each task may also include affinity. The activity may be started in a task that has the same affinity as the activity. The affinity may be, for example, a package name of an application.

For example, as shown in FIG. 4, at a moment 1, the electronic device runs a task 1 in the foreground, where the task 1 includes an activity 1 and an activity 2 of the application 1, and the activity 2 is located at the stack top, that is, the electronic device displays a picture corresponding to the activity 2. In addition, the electronic device runs a task 2, a task 3, and a task 4 in the background, and the task 3 includes an activity 3 of an application 2. At a moment 2 after the moment 1, in response to an operation of indicating to start the activity 3 of the application 2, the electronic device may adjust the task 3 corresponding to the application 2 to the foreground, and push the activity 3 to the stack top.

It should be understood that the task creation manner may also be referred to as a stack creation manner, and the task reusing manner may also be referred to as a stack reusing manner. This is not specifically limited in this application.

One of four major components of the Android application, that is, the activity has been described above. In addition to the activity, the four major components of the Android application further include a service (service).

### 11. Service (service)

A service usually refers to a component running in the background. The service performs a long-running operation or task without requiring user interface interaction. The service may be started automatically when the system is started, and run without user login.

### 12. Other terms

In the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity or an execution sequence, and the words such as "first" and "second" do not define a definite difference.

It should be noted that the word "example", "for example", or the like in the embodiments of this application is used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a--c, b-c, or a-b-c, where a, b, and c may be singular or plural.

### 13. Electronic device

The electronic device in the embodiments of this application may include a handheld device, a vehicle-mounted device, or the like with a face recognition function. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in the embodiments of this application.

As an example rather than a limitation, in the embodiments of this application, the electronic device may alternatively be a wearable device. The wearable device may also be referred to as a wearable smart device, and is a generic term for wearable devices such as glasses, gloves, watches, clothing, and shoes that are intelligently designed and developed from daily wear by using wearable technologies. The wearable device is a portable device that is worn directly on a body or integrated into clothing or an accessory of a user. The wearable device is not merely a hardware device, but implements powerful functions through software support, data interaction, and cloud interaction. In a broad sense, the wearable smart device includes a full-featured and large-size device that can implement all or some of functions without relying on a smartphone, for example, a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may also be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The electronic device in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as Browser, Contacts, word processing software, and instant messaging software.

To improve running efficiency of the application and visual experience and operation experience of the user, the electronic device may display pictures of some applications in a non-full-screen display manner.

By using an application a as an example, the electronic device may display, in the following two manners, a picture of the application a in a non-full-screen manner.

First, it should be noted that the electronic device displaying the picture of the application a may alternatively be understood as the electronic device running a task of the application a in the foreground, where the task is, for example, a task a. In addition, an activity at a stack top of the task a is an activity of the application a, and the activity is, for example, an activity a. In this case, the picture of the application a is a picture corresponding to the activity a. Therefore, for ease of understanding, in the following description, the electronic device displaying the picture of the application a or the electronic device displaying the picture corresponding to the activity a is described as follows: The electronic device runs the task a in the foreground, and the activity a is located at the stack top of the task a.

Manner 1: The task a runs in the foreground in a form of a floating window, and the activity a is located at the stack top of the task a.

In this manner, the electronic device may set a size of a layer of the task a to be smaller than a size of the display screen of the electronic device. In this way, because the layer of the task a is a parent node of the layer of the activity a, the size of the layer of the activity a is smaller than the size of the display screen of the electronic device. A layer of a view corresponding to the activity a is a child node of the layer of the activity a, so that a size of a picture corresponding to the activity a displayed by the electronic device is smaller than the size of the display screen of the electronic device. This ensures that the electronic device may display the picture corresponding to the activity a in a form of a floating window.

Manner 2: The task a runs in one view of an application b, where the view is, for example, a view 1, and the activity a is located at a stack of the task a.

The application b is an application other than the application a. The application b may create a target window, the view 1 may be disposed in the target window, and the view 1 may be used to run a task of another application, for example, to run the task a of the application a.

To run the task a in the view 1, the task a may be set as a child node of the view 1. In this way, when the task a runs in the foreground, and the activity a is located at the stack top of the task a, the picture corresponding to the activity a is displayed in a rectangular area corresponding to the view 1.

It should be understood that, from a perspective of display of the electronic device, setting the task a as a child node of the view 1 is actually setting the layer of the task a as a child node of the layer of the view 1. The layer of the task a is a parent node of the layer of the activity a, and the layer of the activity a is a parent node of the layer of the view a (the view a is a view of the activity a), so that a picture corresponding to the activity a formed by the layer of the view a may be displayed in the view 1. Therefore, in this embodiment of this application, displaying the picture (the picture of the application a) corresponding to the activity a in the view 1 of the application b is actually setting the layer of the task a as a child node of the layer of the view 1. However, for brevity of description, in the following description, setting the layer of the task a as a child node of the layer of the view 1 is referred to as setting the task a as a child node of the view 1.

It should be further understood that, setting the task a as a child node of the view 1 means running the task a in the view 1 and embedding the task a into the view 1. In addition, the task a is set as a child node of the view 1, so that the picture (the picture of the application a) corresponding to the activity a is displayed in a rectangular area corresponding to the view 1. Therefore, setting the task a as a child node of the view 1 may also be referred to as embedding the picture corresponding to the activity a into the view 1, embedding the picture corresponding to the activity a into the target window (the view 1 is disposed in the target window of the application b), embedding the application a into the target window, or the like. This is not specifically limited in this application.

In the foregoing manner 2, when the size of the rectangular area corresponding to the view 1 is smaller than the size of the display screen of the electronic device, the electronic device displays the picture corresponding to the activity a in a non-full-screen manner.

It should be noted that, when the electronic device runs the task a in manner 1, the parent node of the task a is not a view of another application in the electronic device, and the parent node of the task a is a default task display area (default task display area) in the electronic device. In other words, a change of a view of another application in the electronic device does not affect a running state of the task a. However, when the electronic device runs the task a in manner 2, the task a is a child node of the view 1. Therefore, a change of the target window or the view 1 may cause a change in the running state of the task a. For example, when the user closes the target window, the electronic device may destroy the task a or the like.

It should be understood that the parent node of the task being the default task display area may alternatively be understood as the parent node of the layer of the task being the default task display area. The parent node of the task is set to the default task display area, so that a window of the application (a picture of the application) can be displayed at a default position on the display screen of the electronic device, for example, the window of the application can be displayed in full screen. The default task display area is unrelated to a rectangular area corresponding to any view.

As the activity at the stack top of the task a varies, a target window of the application b may display pictures corresponding to different activities, that is, display different pictures of the application a. In addition, the task a may alternatively be replaced with a task of another application. In this way, the target window of the application b may display pictures of different applications, so that running efficiency of the application is relatively high.

In an example, with reference to FIG. 5, first, the electronic device runs a note application in the foreground. As shown in an interface (a) in FIG. 5, in response to an input operation performed by the user on a restaurant A in the note application, the electronic device starts a smart assistant. The input operation may be, for example, an operation of copying the restaurant A. The smart assistant is another application in the electronic device. After being started, the smart assistant may create a window 501. The window 501 is displayed on the display screen of the electronic device in full screen, and a layer in the window 501 is in a semi-transparent state. The window 501 may be used to embed another application program. The window 501 includes a view 502, and content displayed in the view 502 includes a floating ball and information that prompts the user to locate the restaurant A. The content displayed in the view 502 may be expanded in response to an operation of tapping a triangle control in the view 502 by the user.

In response to the operation of tapping the triangle control in the view 502 by the user, as shown in an interface (b) in FIG. 5, the electronic device displays a view 503 in the window 501. The view 503 is used to display a state after the content in the view 502 is expanded. In addition, the window 501 further includes a view 504, and in response to the operation of tapping the triangle control in the view 502 by the user, the electronic device further displays, in the view 504, a picture corresponding to an activity x1 included in a navigation application.

It should be understood that in this example, the smart assistant may be understood as the application b in the foregoing embodiment, the window 501 may be understood as the target window, the view 504 may be understood as the view 1 in the target window, the navigation application may be understood as the application a, and the activity x1 may be understood as the activity a.

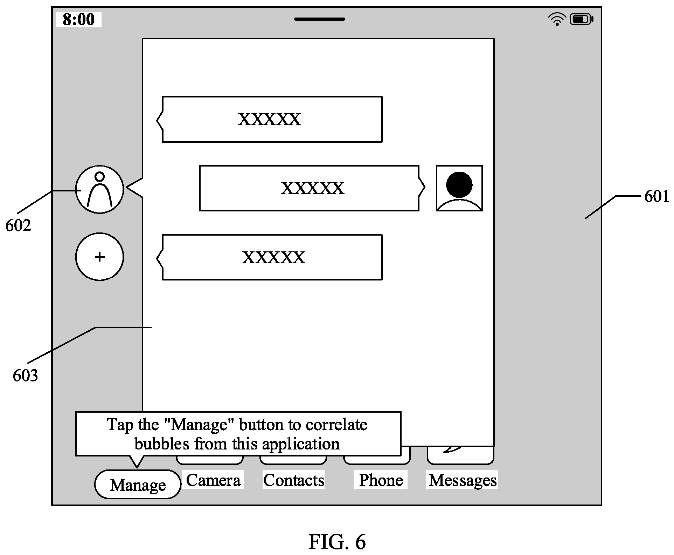

In another example, as shown in FIG. 6, the electronic device may have a bubble notification function. To be specific, after detecting a message notification, the electronic device may embed a chat picture into a window that is displayed in full screen. For example, when the electronic device displays the home screen, the electronic device receives a message 1. When the electronic device detects the message 1, the electronic device may display a window 601 that is displayed in full screen and that corresponds to the bubble notification function. A layer in the window 601 is in a semi-transparent state, and the window 601 may embed another application program. A portrait 602 is displayed in the window 601. In response to a tap operation performed by the user on the portrait 602, the electronic device may start an activity x2 of a social application by using a view 603 laid out in the window 601, and display a chat picture corresponding to the activity x2 in the view 603 of the window 601.

It should be understood that in this example, the bubble notification function may be understood as the application b in the foregoing embodiment, the window 601 may be understood as the target window, the view 603 may be understood as the view 1 in the target window, the social application may be understood as the application a, and the activity x2 may be understood as the activity a.

It may be understood that, when the electronic device runs the task a in the foregoing manner 2, because the view 1 is a parent node of the task a, a change in the state of the view 1 may cause a change in the state of the task a. However, the change in the state of the task a does not necessarily cause a change in the state of the view 1. The state change may include but is not limited to a size, a position, and an on-off state.

For example, because the view 1 is disposed in the target window, the change in the state of the view 1 may be embodied by the change in the state of the target window. When the task a runs in the view 1, the electronic device may close the picture corresponding to the activity a based on an operation of indicating to remove the task a, but the electronic device may still display the target window. For example, with reference to FIG. 5, in response to an operation of tapping a triangle button in an interface (b) by the user, the electronic device may display the interface (a), that is, the window 501 is still displayed, but the picture of the navigation application is closed. Alternatively, based on an operation of removing the target window, the electronic device may remove the target window and remove the task a, that is, close the target window and the picture corresponding to the activity a. For example, with reference to FIG. 5, in response to an operation of closing the window 501 by the user, the electronic device may remove the window 501, and the picture of the navigation application is also closed.

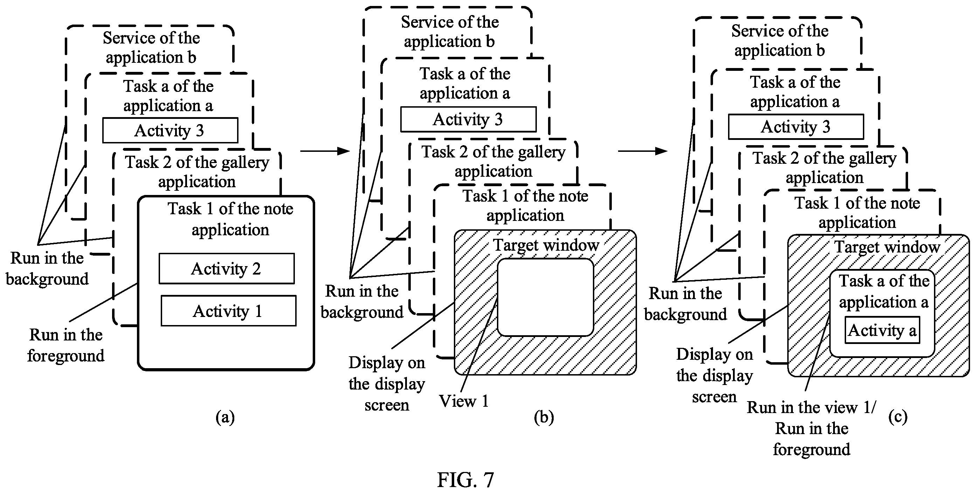

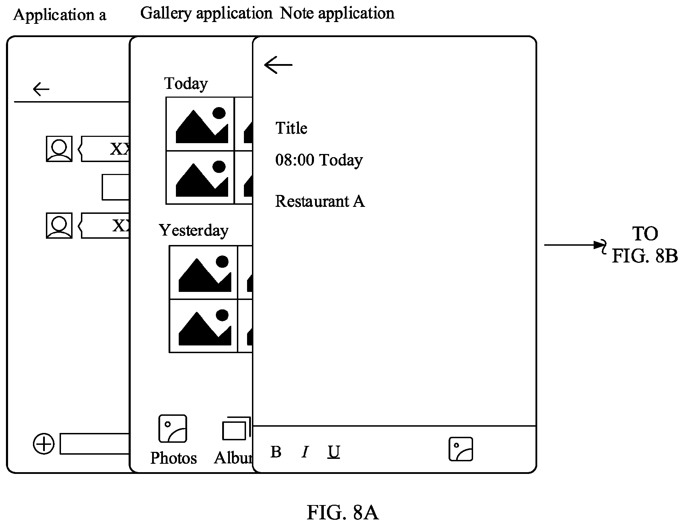

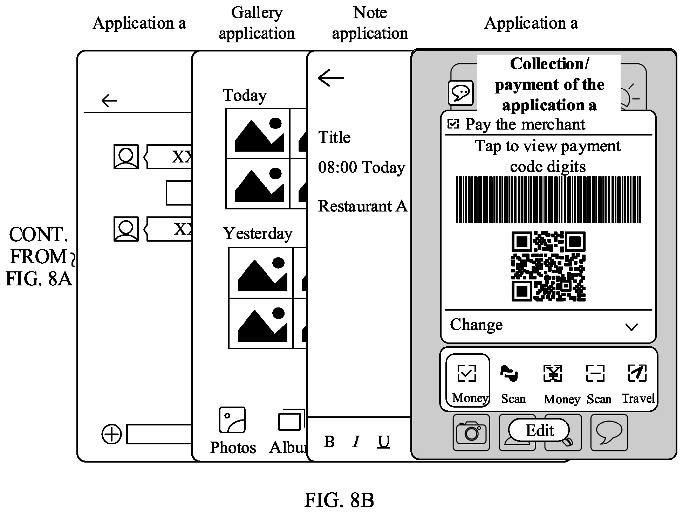

In some embodiments, the electronic device may run the task a in the view 1 in the task creation manner, that is, the task a is a task newly created by the electronic device. With reference to FIG. 7, FIG. 8A, and FIG. 8B, the following describes a process of running the task a in the view 1 in the task creation manner.

For example, as shown in (a) in FIG. 7, at a moment 1, the electronic device runs a task 1 of the note application in the foreground, and the electronic device runs a task 2 of a gallery application, a task a of an application a, and a service (service) of a task b in the background. The application a may be a social application, an activity 3 in the application a is located at a stack top, and the activity 3 provides a chat interface. In this case, in response to an operation of viewing a multi-task card by the user (for example, an operation of sliding upward from the bottom of the screen and staying), the multi-task card displayed by the electronic device may be shown in FIG. 8A. The multi-task card includes a card of the note application running in the foreground, a card of the gallery application running in the background, and a card of the application a, and the card of the application a displays the chat interface.

At a moment 2 after the moment 1, the service of the task b detects an operation of enabling a payment code function of the application a by the user. As shown in (b) in FIG. 7, the service of the application b may create a target window, a view 1 is disposed in the target window, and the application a may be embedded into the view 1.

The target window created by the service of the application b may be understood as a window running in the foreground. To be specific, the target window is a window with which the user can currently interact. Alternatively, in the multi-task card, the target window is at a position of the card of the application running in the foreground. For example, with reference to FIG. 8B, a difference from FIG. 8B lies in that the target window is located above the note application, that is, the target window is at the position of the card of the application running in the foreground, but the target window does not display a picture corresponding to a collection/payment function of the application a.

At a moment 3 after the moment 2, as shown in (c) in FIG. 7, because the payment code function of the application a corresponds to the activity a, the electronic device creates a new task a, starts the activity a in the newly created task a, and sets the task a as a child node of the view 1. This ensures that the task a runs in the view 1. In this case, in response to the operation of viewing the multi-task card by the user, the multi-task card displayed by the electronic device may be shown in FIG. 8B. The multi-task card includes the card of the application a running in the foreground, the card of the application a running in the foreground displays the payment code interface, and the payment code interface is embedded into the target window. The multi-task card further includes the card of the note application running in the background, the card of the gallery application, and the card of the application a. The card of the application a running in the background displays the chat interface.

It should be noted that FIG. 7 is merely an example. In (a) in FIG. 7, the task that is run by the electronic device in the background may alternatively be a task of another application. For example, at the moment 1, the task running in the background may alternatively not include the task of the application a. In this case, the electronic device also creates a new task a, and starts the activity a in the newly created task a. In other words, in the manner shown in FIG. 7, the electronic device creates a new task a regardless of whether the electronic device runs the task a of the application a.

For example, with reference to FIG. 5, the activity x1 of the navigation application is started in the newly created task, and the newly created task is a child node of the view 504. With reference to FIG. 6, the activity x2 of the social application is started in the newly created task, and the newly created task is a child node of the view 603.

It should be understood that the service of the application b may run in the background of the electronic device after the Android system is started, and the service of the application b may not provide an interface. Therefore, as shown in FIG. 8A-FIG. 8B, in response to an operation of viewing the multi-task card by the user, the electronic device does not display the card of the application b. For brevity, details are not described again in the following description.

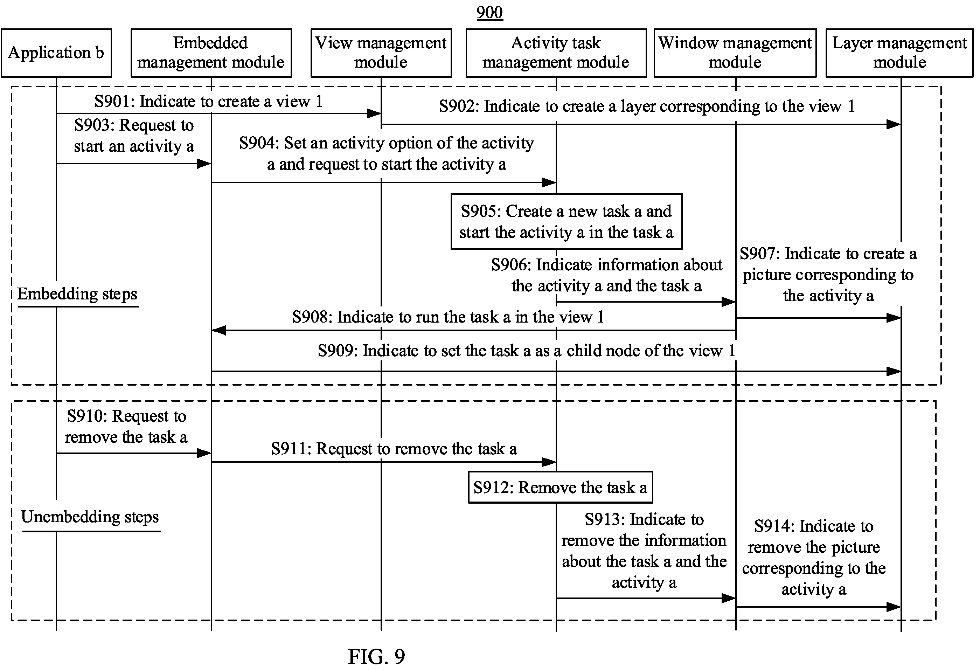

With reference to FIG. 9, from a perspective of interaction between internal modules of the electronic device, the following describes in detail a process in which the electronic device runs the task a in the view 1 in the task creation manner and a process in which the task a stops running in the view 1.

The electronic device may include an embedded management module, an activity task management module (activity task manager service, ATMS), a window management module (windows manager service, WMS), and a layer management module. The embedded management module may be configured to start an activity in an embedded manner.

FIG. 9 is a schematic flowchart of an application starting method 900. The method 900 includes the following steps, where S901 to S909 are steps of embedding the application a into the target window by the electronic device in the task creation manner.

S901: In response to an operation of starting a function 1 of the application a by the user, an application b indicates a view management module to create a view 1.

For example, with reference to FIG. 5, the application a is, for example, a navigation application. The function 1 of the application a is, for example, a navigation function. The operation of starting the function 1 of the application a by the user may be, for example, an operation of tapping a triangle button in a view 502 in an interface (a). In response to this operation, the view management module may create a view 504 (namely, the view 1) in a window 501 (namely, the target window).

Optionally, the application b may determine, based on a preset xml file in the electronic device, that a picture corresponding to the function 1 may be embedded into the view 1. The application b indicates, based on the xml file, the view management module to create the view 1, and disposes the view 1 in the target window. The target window may be created by the application b by invoking the window management module before S901.

S902: The view management module indicates the layer management module to create a layer of the view 1.

For example, a scenario shown in FIG. 5 is still used as an example. After receiving the foregoing indication, the view management module may create a layer of the view 504 (namely, the view 1). The view 504 is used to display a related activity of the navigation application.

S903: The application b requests the embedded management module to start the activity a, where the function 1 of the application a corresponds to the activity a of the application a.

For example, the scenario shown in FIG. 5 is still used as an example. The smart assistant (namely, the application b) requests the embedded management module to start the activity x1 (namely, the activity a) of the navigation application, and the activity x1 is used to provide a picture in the view 504.

Optionally, the application b invokes, by using the embedded management module, a related method or function in the view 1 to start the activity a. In this way, the embedded management module may determine that the picture corresponding to the activity a needs to be embedded into the view 1.

In addition, the application b may further indicate a bounds (bounds) attribute parameter 1 to the embedded management module. The bounds (bounds) attribute parameter 1 may be understood as a parameter used to describe a size and a position of the picture corresponding to the activity a. The bounds attribute parameter 1 may include, for example, coordinates 1 and coordinates 2. The coordinates 1 may be understood as coordinates of an upper left corner of the picture corresponding to the activity a, and the coordinates 2 may be understood as coordinates of a lower right corner of the picture corresponding to the activity a. This helps enable the electronic device to subsequently set the size and the position of the picture corresponding to the activity a.

It should be understood that the coordinates 1 and the coordinates 2 are coordinates in a coordinate system on the display screen of the electronic device. The coordinate system on the display screen of the electronic device may also be referred to as a screen coordinate system, and is a coordinate system on the display screen of the electronic device for locating elements such as a graph or a text. An origin of the screen coordinate system may be, for example, the upper left corner of the screen, an x-axis may be a horizontal axis that points to the right side of the display screen, and a y-axis may be a vertical axis that points to the bottom end of the display screen. This is not specifically limited in this application.

It should be noted that the bounds attribute parameter 1 may also be referred to as a size of the task a, or the like. This is not specifically limited in this application.

Optionally, when detecting that the user starts the function 1 (the function 1 corresponds to the activity a) of the application a, the application b may request the embedded management module to start the activity a. For example, with reference to FIG. 5, the input event may be generated based on an operation of tapping a triangle control in the view 502 by the user. Alternatively, with reference to FIG. 6, the input event may be generated based on an operation of tapping the portrait 602 by the user. S904: The embedded management module sets an activity option (activity options) of the activity a, and requests the activity task management module to start the activity a.

The activity option may also be referred to as a start parameter of the activity a. The activity option may include a plurality of types of parameters for starting the activity a. Activity options of various activities may be encapsulated into one class that is used to manage the activity options in the electronic device. When the embedded management module starts the activity a, the embedded management module may obtain the activity option of the activity a. In addition, the activity option of the activity a is set, so that the activity task management module can start the activity a in a manner indicated by the set activity option of the activity a.

For example, the activity option of the activity a may include an option 1, and the option 1 is used to set to start the activity a in an embedded or non-embedded manner. Based on the operation of invoking the embedded management module by the application b, the embedded management module may determine that the activity a needs to be started in the embedded manner. Therefore, the embedded management module may set the option 1 to information used to indicate to start the activity a in the embedded manner. The information used to indicate to start the activity a in the embedded manner may be, for example, true or 1.

It should be understood that starting the activity a in the embedded manner may alternatively be understood as follows: After the activity a is started in the task a, a parent node of the task a needs to be subsequently set to a view of another application. Starting the activity a in the non-embedded manner may alternatively be understood as follows: After the activity a is started in the task a, a parent node of the task a needs to be subsequently set to the default task display area.

The activity option of the activity a may further include an option 2, and the option 2 is used to set the bounds attribute parameter 1 of the picture corresponding to the activity a. The embedded management module may set the option 2 based on an indication of the application b.

The activity option of the activity a may further include an option 3, and the option 3 may be used to set information used to indicate the view 1. In this way, the option 3 may indicate to embed the picture corresponding to the activity a into the view 1. The option 3 may be set based on S903. In S903, the application b invokes, by using the embedded management module, a related method or function in the view 1 to start the activity a. Therefore, the embedded management module sets the option 3 to the information used to indicate the view 1.

It should be understood that the activity option of the activity a may further include a plurality of other options such as a name and a uniform resource identifier (uniform resource identifier, URI) of the activity a, or an option of task affinity of the activity a. The plurality of other options in the activity option of the activity a are not specifically limited in this application.

S905: In response to an indication from the embedded management module, the activity task management module creates a new task a, and starts the activity a in the task a.

It should be understood that, in response to the option 1 in the activity option of the activity a, the activity task management module may determine that the activity a needs to be started in the embedded manner. Because the task a runs in the view 1 in the task creation manner, the activity task management module may determine that a new task needs to be created, and the activity a is started in the newly created task. In addition, the activity option of the activity a may include information used to indicate a task. The task is a task that can manage the activity a, and the task is, for example, the task a of the application a. Therefore, the activity task management module may further create a new task a based on the activity option of the activity a.

S906: The activity task management module indicates information about the activity a and the task a to the window management module.

The information about the activity a and the task a may include a bounds attribute parameter 1, information used to indicate to run the task a in the view 1, information used to indicate the activity a, and information used to indicate the task a. The information used to indicate the activity a may be, for example, a name of the activity a, and the information used to indicate the task a may be, for example, an ID of the task a.

The information used to indicate to embed the picture corresponding to the activity a into the view 1 may be, for example, setting an object that can be transmitted across processes, where the object that can be transmitted across processes may be used to indicate the view 1. It may be understood that when the activity task management module starts the activity a, the activity option of the activity a is read, and the information used to indicate the view 1 is set in the option 3 in the activity option of the activity a. Therefore, the activity task management module may determine that the task a needs to run in the view 1. Further, the activity task management module may indicate the window management module to run the task a in the view 1.

It should be understood that, one or more attributes may be set for each task running in the electronic device, and the attribute of the task may alternatively be understood as a flag bit that is used to describe a nature such as a size of a layer of the task and whether the task is visible.

In response to the indication from the activity task management module, the window management module may create a window of the activity a, and the window is a parent node of the view of the activity a. In addition, the window management module may set a size and a layout of the window based on the bounds attribute parameter 1.

S907: The window management module indicates the layer management module to create a picture corresponding to the activity a.

In response to the indication from the window management module, the layer management module creates a layer of the view a. The view a is one or more views of the activity a. The layer of the view a may form a picture corresponding to the activity a.

S908: The window management module indicates the embedded management module to run the task a in the view 1.

For example, the window management module indicates, to the embedded management module, the information used to indicate the task a and the information used to indicate the view 1, for example, names of the task a and the view 1. It may be understood that, the activity task management module indicates, to the window management module based on the option 3, the information for running the task a in the view 1. Therefore, in response to this indication from the activity task management module, the window management module further indicates the embedded management module to run the task a in the view 1.

It should be understood that S907 and S908 may be performed concurrently, or S907 may be performed before or after S908. This is not specifically limited in this application.

S909: The embedded management module indicates the layer management module to set the task a as a child node of the view 1.

Setting the task a as a child node of the view 1 may alternatively be replaced with setting the view 1 as a parent node of the task a, mounting the task a under the view 1, or the like.

In this way, the activity a is managed in the task a, and the activity a is located at a stack top. Therefore, when the task a is a child node of the view 1, the picture corresponding to the activity a may be displayed in the view 1.

On the basis of the foregoing embodiment, optionally, the embedded management module or the window management module may further indicate the layer management module to set an attribute of the task a, for example, set the task a to be visible. The layer management module may be further indicated to set, based on the bounds attribute parameter 1, a size, a position, and the like of the picture corresponding to the activity a.

In this way, through setting by the layer management module, the task a may run in the view 1. For example, as shown in the interface (a) in FIG. 5, the picture of the navigation application is displayed in the view 504.

S910 to S912 are steps in which the task a stops running in the view 1. With reference to FIG. 5, the picture of the navigation application stops being displayed in the view 504.

It should be understood that the task a stopping running in the view 1 may also be referred to as the task a being unembedded from the view 1, the picture of the application a being unembedded from the view 1, the picture corresponding to the activity a being unembedded from the view 1, the picture corresponding to the activity a being unembedded from the target window, or the like. This is not specifically limited in this application.

S910: The application b requests the embedded management module to remove the task a.

In a possible manner, the application b may invoke, by using the embedded management module, the method or the function in the view 1 to request to remove the task a. In this way, the electronic device can close the picture corresponding to the activity a. However, the electronic device may still display a visual layer in the target window.

For example, with reference to FIG. 5, in response to tapping a triangle button in a view 503 in the interface (b) by the user, content in the view 503 may be collapsed, and the view 504 may no longer display the picture of the navigation application. However, the electronic device may still display the window 501, that is, the interface displayed by the electronic device may be switched from the interface (b) to the interface (a).

In another possible manner, the application b requesting the embedded management module to remove the task a may alternatively be replaced with the application b requesting the embedded management module to remove the target window, or may be understood as the embedded management module detecting that the view 1 or the target window is removed, or the like. In this way, the electronic device can close the target window, and because the view 1 is disposed in the target window and the task a is a child node of the view 1, the task a is also removed. To be specific, the electronic device no longer displays the picture corresponding to the activity a, and no longer displays the visual layer in the target window.

For example, with reference to FIG. 5, in response to tapping a blank area in a window 501 in the interface (b) by the user, the electronic device may display an interface of the note application. To be specific, the window 501 is closed, and the view 503 no longer displays the picture of the navigation application.

S911: The embedded management module requests the activity task management module to remove the task a.

S912: In response to the request of the embedded management module, the activity task management module removes the task a.

S913: The activity task management module indicates the window management module to remove information about the task a and the activity a.

In response to the indication from the activity task management module, the window management module may delete, for example, a bounds attribute parameter 1, information used to indicate to run the task a in the view 1, information used to indicate the activity a, information used to indicate the task a, and a window of the activity a.

S914: The window management module indicates the layer management module to remove the picture corresponding to the activity a.

In this way, the layer management module may delete the layer of the view a.

However, the following problems may exist in running the task a in the view 1 in the task creation manner.

Problem 1: Display of the electronic device may be abnormal.

In an example, there may be an association relationship between activities in the electronic device. The association relationship may include destroying another activity in the presence of one activity. In this way, with reference to FIG. 7, it is assumed that an activity 2 is destroyed when an activity a is started, and the activity 2 is an activity of the note application. In other words, when an interface of the note application is displayed on the display screen of the electronic device in full screen, after the activity a is started, the activity 2 may be destroyed. Consequently, the electronic device may no longer display the interface of the note application in full screen. As a result, the user sees crash of the note application, leading to relatively poor user experience. For example, with reference to FIG. 5, the activity 2 may be understood as an activity of the note application, and the activity 2 provides an interface of the note application that is displayed in full screen under the window 501. The activity a may alternatively be understood as an activity x1 included in the navigation application. After the activity x1 is started, the activity of the note application is destroyed. Consequently, the interface of the note application that is displayed in full screen under the window 501 disappears. To be specific, the user can see, through the window 501, crash of the note application.

In another example, the activity a in the electronic device can only exist as a single instance. To be specific, a plurality of same activities a cannot exist in the electronic device. In this way, with reference to FIG. 7, it is assumed that in addition to the activity a, the task a running in the background further includes an activity a. When the activity a in the electronic device can exist only as a single instance, the activity a in the newly created task a may be destroyed immediately after being started. In this way, after the electronic device starts the activity a in the newly created task a, the view 1 may display a picture corresponding to the activity a. However, as the activity a in the newly created task is destroyed, the picture corresponding to the activity a in the view 1 is closed again. As a result, the user sees crash of the application a.

It can be learned that, in the foregoing case, to enable the picture corresponding to the activity a to be stably displayed in the target window, it may be necessary to set a rule that the activity a runs in the electronic device, for example, set the activity a to be able to exist as a plurality of instances. This makes development relatively difficult.

Problem 2: The newly created task leads to relatively high power consumption of the electronic device.

Problem 3: When the electronic device already runs the task a of the application a in the background, to embed a picture of the application a into the view 1, the electronic device creates a new task a of another application a. In this way, in response to an operation of viewing the multi-task card by the user, the electronic device displays cards of two applications a, resulting in relatively poor user experience. For example, with reference to (c) in FIG. 7, the electronic device runs the task a of the application a in the background, and runs the task a of the application a in the view 1 in the foreground. In this case, in response to an operation of viewing the multi-task card by the user, the multi-task card displayed by the electronic device may be shown in FIG. 8B, and the electronic device displays cards of two applications a, resulting in relatively poor user experience.

In view of this, this application provides an application starting method. An electronic device may start an activity a in a task reusing manner, and may set a task a (the task a includes the activity a) as a child node of a view 1 in a target window of an application b, so that a picture corresponding to the activity a may be displayed in the view 1. In this way, the electronic device does not need to create a new task, so that power consumption of the electronic device is relatively low.

In addition, when the task a running in a background includes the activity a, the electronic device disposes the task a in a foreground, and disposes the activity a at a stack top of the task a. The electronic device does not create a new task again, and one activity a is started in the newly created task. Therefore, when the activity a can only exist as a single instance, the activity a is not destroyed after being started due to a limitation that the activity a can only exist as a single instance. In this case, a probability that a user sees crash of an application a is relatively low, so that the electronic device can normally display a picture corresponding to the activity a.

In addition, when the electronic device already runs the task a of the application a in the background, the electronic device no longer creates a new task a, and when the user views the application running in the electronic device, the electronic device does not display application cards of two applications a. This ensures that user experience is relatively good.

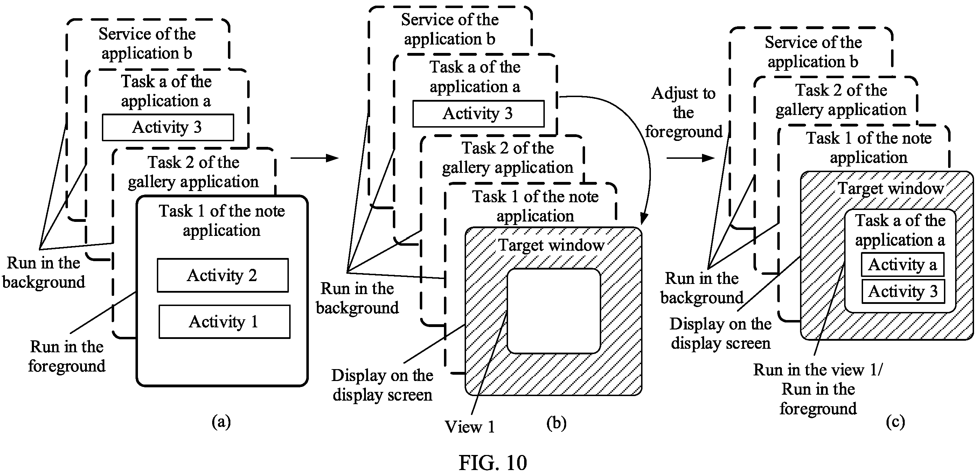

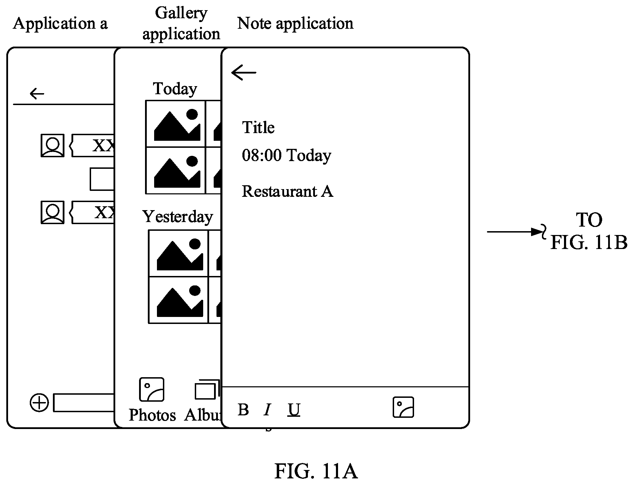

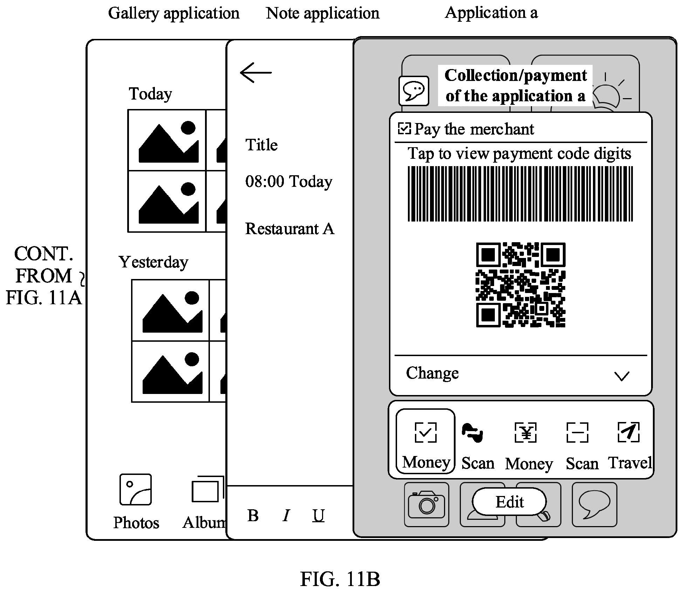

With reference to FIG. 10, FIG. 11A, and FIG. 11B, the following describes a process of running the task a in the view 1 in a task reusing manner.

For example, as shown in (a) in FIG. 10, a scenario shown in (a) in FIG. 10 is similar to a scenario shown in (a) in FIG. 7. At a moment 4, the electronic device runs a service of the application b, the task a of the application a, and a task 2 of a gallery in the background, and the electronic device runs a task 1 of a note application in the foreground. The application a is a social application, an activity 3 in the task a is located at the stack top, and the activity 3 provides a chat interface. In this case, in response to an operation of viewing a multi-task card by the user, the multi-task card displayed by the electronic device may be shown in FIG. 11A. The multi-task card includes a card of the note application running in the foreground, a card of the gallery application running in the background, and a card of the application a, and the card of the application a displays the chat interface.

At a moment 5 after the moment 4, the service of the application b detects an operation of enabling a payment code function of the application a by the user. In this case, as shown in (b) in FIG. 10, the service of the application b may create a target window, and a view 1 may be disposed in the target window. Because the payment code function of the application a corresponds to the activity a, the electronic device needs to start the activity a. In this way, when the electronic device determines that the activity a can be started by reusing the task a running in the background, the task a may be adjusted to the foreground for running.

At a moment 6 after the moment 5, as shown in (c) in FIG. 10, the electronic device disposes the task a of the application a in the foreground, and starts the activity a in the task a. The activity 3 is located at the stack top when the task a runs in the background. Therefore, after the activity a is started in the task a, the activity 3 is located under the activity a. In addition, the electronic device sets the task a as a child node of the view 1. This ensures that the task a runs in the view 1. In this case, in response to the operation of viewing the multi-task card by the user, the multi-task card displayed by the electronic device may be shown in FIG. 11B. The multi-task card includes the application a running in the foreground, the application a displays a payment code interface, and the payment code interface is embedded into a target window of the application b. The multi-task card further includes the card of the note application running in the background and the card of the gallery application.

It can be seen from comparison between the multi-task card shown in FIG. 11B and the multi-task card shown in FIG. 8B that, the task a runs in the view 1 by using the method in this application, so that the multi-task card may not include cards of two applications a, thereby improving user experience.

It may be understood that FIG. 10 is merely an example, and the task a may alternatively include an activity other than the activity a and the activity 3. For example, in (a) in FIG. 10, in addition to the activity 3 at the stack top, the task a running in the background further includes one or more activities under the activity 3. In this case, in (c) in FIG. 10, when the task a is disposed in the foreground and the activity a is disposed at the stack top, the one or more activities are further included under the activity 3. This is not specifically limited in this application.

In addition, if in (a) in FIG. 10, in addition to the activity 3, the task a running in the background further includes the activity a, the electronic device starting the activity a in the task a is disposing the task a in the foreground, and disposing the activity a at the stack top. If in (a) in FIG. 10, in addition to the activity 3, the task a running in the background does not include the activity a, the electronic device starting the activity a in the task a is disposing the task a in the foreground, and starting the activity a in the task a.

Optionally, in addition to being created by using the service of the application b, the target window of the application b may alternatively be created in one of the following two manners.

In a possible manner, with reference to (a) in FIG. 10, at a moment 4, it is assumed that the electronic device runs a task b of the application b in the background. In this case, at a moment 5 after the moment 4, in response to an operation of enabling a payment code function of the application a by the user, the task b of the application b may be adjusted to the foreground for running, and an activity such as an activity b of the application b may be started in the task b. Then, the electronic device may create a window of the activity b, where the window of the activity b is a target window of the application b. Further, the electronic device may run the task a in a view such as a view 1 of the target window.

In another possible manner, which differs from the foregoing possible manner in that, with reference to (a) in FIG. 10, at the moment 4, the electronic device does not run a task of the application b in the background. In this case, at a moment 5 after the moment 4, in response to an operation of enabling the payment code function of the application a by the user, the electronic device creates a task b of the application b, and starts an activity such as an activity b of the application b in the task b. Then, the electronic device may create a window of the activity b, where the window of the activity b is a target window of the application b. Further, the electronic device may run the task a in a view such as a view 1 of the target window.

It should be noted that, the foregoing description is provided by using an example of embedding the application a into the target window of the application b. In some possible implementations, the application a may be a plurality of different applications. For example, a plurality of views may be disposed in the target window. In addition, some views in the plurality of views may be used to respectively embed different applications or pictures corresponding to different activities of a same application. The following further describes this case with reference to FIG. 12A to FIG. 12F.

As shown in FIG. 12A to FIG. 12F, the application b may be an application that can start one or more other applications, for example, the application b may be a quick code display application. A window of the quick code display application is a window 1201 (namely, a target window). A visible layer that is displayed on the display screen of the electronic device in full screen is drawn in the window 1201, and the visible layer that is displayed on the display screen of the electronic device in full screen in the window 1201 is in a semi-transparent state. Therefore, through the visible layer, the user can also see an application such as a home screen of the electronic device. In addition, a plurality of views may be disposed in the window 1201. Rectangular areas corresponding to the plurality of views may be the same or different. Some views in the plurality of views may be used to respectively embed pictures corresponding to different activities, and the some views may also be referred to as embedded views, that is, views that can embed a picture of another application.

In this case, the application a may be a social application 1, a payment application 2, a video conferencing application 3, or the like. The application 1 and the application 2 have functions such as providing a payment code, scanning, providing a collection code, and providing a transport code. The application 3 has functions such as providing a payment code, scanning, providing a collection code, and clock-in/clock-out. Pictures corresponding to different functions in the application 1, the application 2, or the application 3 may be provided by different activities in the application 1, the application 2, or the application 3.

For example, an activity a1 in the application 1 corresponds to a payment code function of the application 1. An activity a2 in the application 1 corresponds to a scan function of the application 1. An activity a3 in the application 2 corresponds to a payment code function of the application 2. An activity a4 in the application 2 corresponds to a scan function of the application 2. An activity a5 in the application 2 corresponds to a transport code function of the application 2. An activity a6 in the application 3 corresponds to a clock-in/clock-out function of the application 3.

First, it should be noted that, before the electronic device displays any interface in FIG. 12A to FIG. 12F, that is, before a picture of the application 1, the application 2, or the application 3 is embedded into the quick code display application, the electronic device may already run one or more of the application 1, the application 2, and the application 3 in the background. To be specific, the electronic device runs a task such as a task a-1 of the application 1 in the background. In this way, the electronic device may reuse the task a-1 when subsequently starting an activity (for example, an activity a1 and an activity a2) of the application 1. When a task such as a task a-2 of the application 2 runs in the background, the electronic device may reuse the task a-2 when subsequently starting an activity (for example, an activity a3, an activity a4, and an activity a5) of the application 2. When a task such as a task a-3 of the application 3 runs in the background, the electronic device may reuse the task a-3 when subsequently starting an activity (for example, an activity a6) of the application 3. In the foregoing scenario, the quick code display application may embed the picture of the application 1, the picture of the application 2, and the picture of the application 3 in the following manner.

In response to an operation of enabling the payment code function in the application 1 by using the quick code display application (for example, an operation of tapping a screen or an operation of double-tapping an icon of the quick code display application), the electronic device may display an interface in FIG. 12A. As shown in the interface in FIG. 12A, a window 1201 in which the quick code display application is located includes a view 1202, and the view 1202 displays a picture corresponding to a payment code function of another application (namely, an application 1).

The picture corresponding to the payment code function of the application 1 may be a picture corresponding to the activity a1 of the application 1. The activity a1 is started by reusing the task a-1. Therefore, the task a-1 is switched from the background to the foreground for running. The task a-1 is a child node of the view 1202, so that a picture corresponding to the activity a1 at a stack top of the task a-1 is displayed in the view 1202.

In addition, the view 1202 may be understood as a view corresponding to a selected collection/payment button in the interface in FIG. 12A. To be specific, in response to an operation of selecting the collection/payment button, the electronic device may display a picture corresponding to the payment code function in the view 1202. The selected button may be understood as a frame-selected button among the buttons such as collection/payment, scan, travel, and clock-in/clock-out in the interface shown in FIG. 12A to FIG. 12F.

It should be noted that the buttons such as collection/payment, scan, and travel do not belong to the view 1202. The buttons such as collection/payment, scan, and travel are respectively drawn in other views of the window 1202, and belong to the quick code display application.

In response to an operation of enabling the scan function in the application 1 by the user by using the quick code display application (for example, an operation of tapping the scan button in the interface in FIG. 12A), the electronic device may display an interface in FIG. 12B. In this case, the view 1202 in the window 1201 is switched to a view 1203, and the view 1203 displays a picture corresponding to the scan function of the application 1.

The picture corresponding to the scan function of the application 1 may be a picture corresponding to the activity a2 of the application 1. The activity a2 may also be started by reusing the task a-1. Therefore, after the electronic device switches from the interface in FIG. 12A to the interface in FIG. 12B, the activity at the stack top of the task a-1 is switched from the activity a1 to the activity a2. In addition, a parent node of the task a-1 is switched from the view 1202 to the view 1203. The view 1203 may be understood as a view corresponding to a selected scan button in the interface in FIG. 12B. To be specific, in response to an operation of selecting the scan button, the electronic device may display a picture corresponding to the scan function in the view 1203.

In response to an operation of opening a picture corresponding to the payment code function of the application 2 by the user by using the quick code display application (for example, tapping an edit button and then selecting the payment code function of the application 2 in the interface in FIG. 12B), the electronic device may display an interface in FIG. 12C. In this case, the view 1203 in the window 1201 is switched to a view 1204, and the view 1204 displays a picture corresponding to the payment code function of the application 2.

The picture corresponding to the payment code function of the application 2 may be a picture corresponding to the activity a3 of the application 2. The activity a3 may be started by reusing the task a-2. Therefore, after the electronic device switches from the interface in FIG. 12B to the interface in FIG. 12C, the task a-2 is also switched from the background to the foreground for running. In addition, the task a-1 may be switched from the foreground to the background for running. The task a-2 is a child node of the view 1204. The view 1204 may be understood as a view corresponding to a selected collection/payment button in the interface in FIG. 12C. To be specific, in response to an operation of selecting the collection/payment button, the electronic device may display a picture corresponding to the payment code function of the application 2 in the view 1204.

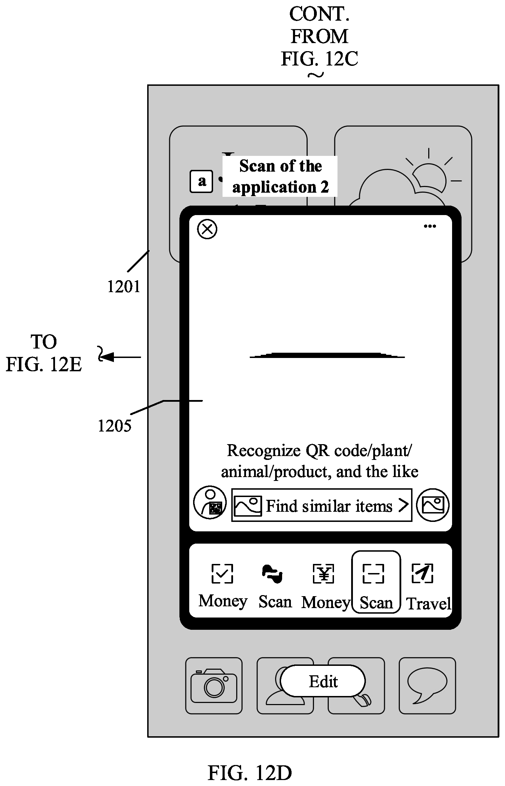

In response to an operation of opening a picture corresponding to the scan function of the application 2 by the user by using the quick code display application (for example, an operation of tapping the scan button in the interface in FIG. 12C), the electronic device may display an interface in FIG. 12D. In this case, the view 1204 in the window 1201 is switched to a view 1205, and the view 1205 displays a picture corresponding to the scan function of the application 2.

The picture corresponding to the scan function of the application 2 may be a picture corresponding to the activity a4 of the application 2. The activity a4 may be started by reusing the task a-2. Therefore, after the electronic device switches from the interface in FIG. 12C to the interface in FIG. 12D, the activity at the stack top of the task a-2 is switched from the activity a3 to the activity a4. In addition, a parent node of the task a-2 is switched from the view 1204 to the view 1205. The view 1205 may be understood as a view corresponding to a selected scan button in the interface in FIG. 12D. To be specific, in response to an operation of selecting the scan button, the electronic device may display a picture corresponding to the scan function of the application 2 in the view 1205.

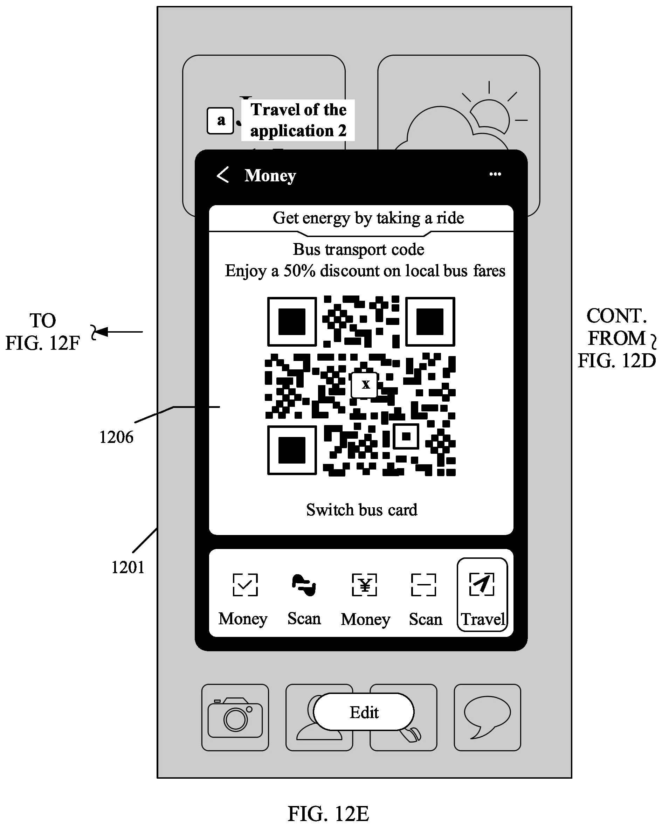

In response to an operation of opening a picture corresponding to the travel function of the application 2 by the user by using the quick code display application (for example, an operation of tapping the travel button in the interface in FIG. 12D), the electronic device may display an interface in FIG. 12E. In this case, the view 1205 in the window 1201 is switched to a view 1206, and the view 1206 displays a picture corresponding to the travel function of the application 2. The picture corresponding to the travel function may include a transport code, for example, a bus transport code shown in the interface in FIG. 12E.

The picture corresponding to the travel function of the application 2 may be a picture corresponding to the activity a5 of the application 2. The activity a5 may be started by reusing the task a-2. Therefore, after the electronic device switches from the interface in FIG. 12D to the interface in FIG. 12E, the activity at the stack top of the task a-2 is switched from the activity a4 to the activity a5. In addition, a parent node of the task a-2 is switched from the view 1205 to the view 1206. The view 1206 may be understood as a view corresponding to a selected travel button in the interface in FIG. 12E. To be specific, in response to an operation of selecting the travel button, the electronic device may display a picture corresponding to the travel function of the application 2 in the view 1206.

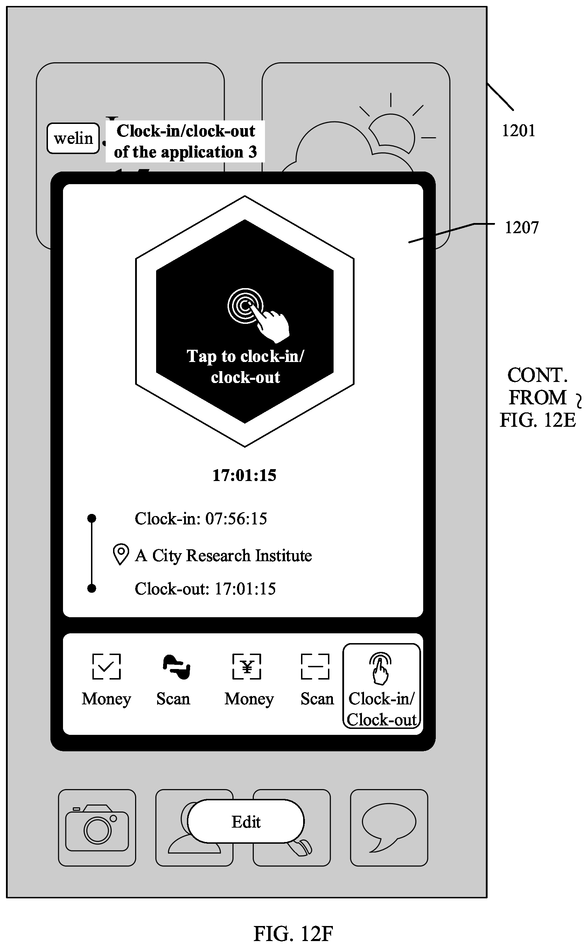

In response to an operation of opening a picture corresponding to the clock-in/clock-out function of the application 3 by the user by using the quick code display application, the electronic device may display an interface in FIG. 12F. The operation of opening the picture corresponding to the clock-in/clock-out function of the application 3 by using the quick code display application may be, for example, an operation of tapping an edit button and then selecting the clock-in/clock-out function of the application 3 in the interface in FIG. 12E by the user. In this case, the view 1206 laid out in the window 1201 is switched to a view 1207, and the view 1207 displays a picture corresponding to the clock-in/clock-out function of the application 3.

The picture corresponding to the clock-in/clock-out function of the application 3 may be a picture corresponding to the activity a6 of the application 3. The activity a6 may be started by reusing the task a-3. Therefore, after the electronic device switches from the interface in FIG. 12E to the interface in FIG. 12F, the task a-3 is switched from the background to the foreground for running, and the task a-2 is switched from the foreground to the background for running. The task a-3 is a child node of the view 1207. The view 1207 may be understood as a view corresponding to a selected clock-in/clock-out button in the interface in FIG. 12F. To be specific, in response to an operation of selecting the clock-in/clock-out button, the electronic device may display a picture corresponding to the clock-in/clock-out function of the application 3 in the view 1207.

In addition, for the interface in FIG. 12A to the interface shown in FIG. 12F, the user may close, by tapping a blank area in the window 1201, the picture corresponding to the application 1, the application 2, or the application 3, and the blank area in the window 1201 may alternatively be understood as an area in a semi-transparent state in the window 1201. Alternatively, the interface in FIG. 12A to the interface shown in FIG. 12F may further include a button that can close the picture corresponding to the application 1, the application 2, or the application 3. In response to an operation of tapping the button by the user, the electronic device may close the picture corresponding to the application 1, the application 2, or the application 3.

It may be understood that the interface shown in FIG. 12A to FIG. 12F is merely an example. In some possible implementations, the interface in FIG. 12A to the interface shown in FIG. 12F may further include more or fewer icons. This is not specifically limited in this application.

It should be understood that the example shown in FIG. 12A to FIG. 12F is described by using an example in which the electronic device sequentially displays the interface in FIG. 12A, the interface in FIG. 12B, the interface in FIG. 12C, the interface in FIG. 12D, the interface in FIG. 12E, and the interface in FIG. 12F. In some possible implementations, the electronic device may display the foregoing interfaces in another order. This is not specifically limited in this application.

In addition, FIG. 12A to FIG. 12F are described by using an example in which the interface in FIG. 12A is displayed by default during starting of the quick code display application. In some possible implementations, the user may alternatively set an interface other than the interface in FIG. 12A to be displayed by default during starting of the quick code display application. In this way, in response to an operation of starting the quick code display application, for example, double-tapping the icon of the quick code display application, the electronic device may display an interface other than the interface in FIG. 12A, for example, display the interface in FIG. 12D by default.

With reference to FIG. 12A to FIG. 12F, it can be seen that according to the application starting method in this application, in response to an operation of tapping the icon of the quick code display application on the home screen by the user, when another application (the application 1, the application 2, or the application 3) is embedded into the window 1201 of the quick code display application, the user sees the home screen of the electronic device through the window 1201. In this way, even if another activity is destroyed after the activity of the application 1, the application 2, or the application 3 is started, the user does not perceive this situation. Compared with the example shown in FIG. 5, it is assumed that the note application crashes when the view 504 displays the picture corresponding to the navigation application, and the user can see that the picture corresponding to the note application disappears. According to the application starting method in this application, user experience may be relatively good.

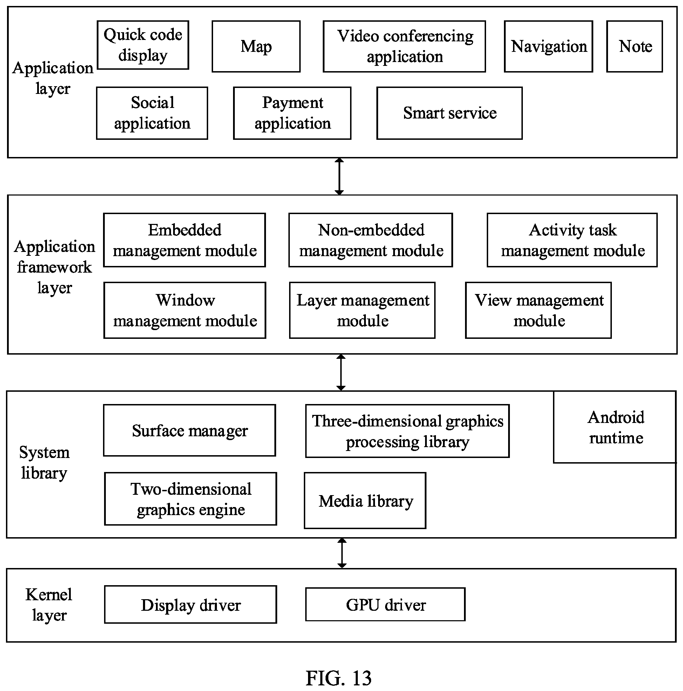

The following describes, in detail with reference to FIG. 13 to FIG. 17B and in combination with specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

The embodiments shown in this application may be executed by an electronic device, may be executed by a chip, a chip system, or a processor that supports an electronic device in implementing an application starting method, or may be executed by a logical module or software that can implement functions of all or some electronic devices. This is not specifically limited in this application.

The following describes the embodiments of this application by using an example in which the electronic device is an execution body. Specific forms and quantities of devices shown in the following description are merely examples, and should not constitute any limitation on implementation of the method provided in this application.

To facilitate understanding of this solution, a software architecture of the electronic device is first described with reference to FIG. 13.

A software system of the electronic device may use a layered architecture, an event-driven architecture, a microkernel architecture, a microservice architecture, or a cloud architecture. With reference to FIG. 13, the following uses an Android system with the layered architecture as an example to describe a software architecture of the electronic device.

For ease of understanding, the layered architecture of the Android system and the involved terms are first explained.

As shown in FIG. 13, the layered architecture divides the software system of the electronic device into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to bottom.

The application layer may include a series of application packages, and an application (application, APP) may also be referred to as an application for short. As shown in FIG. 13, the application package may include applications such as quick code display, a map, a phone, navigation, a note, a social application, a payment application, a smart assistant, and a video conferencing application.

The smart assistant and the quick code display application may be applications that can start a plurality of other applications. The application b in the foregoing description may be, for example, the smart assistant or the quick code display application. The note may be, for example, the note application in the example shown in FIG. 5. The social application may include, for example, a plurality of applications such as an SMS message, for example, the social application in the example shown in FIG. 6, the application a in FIG. 8A, FIG. 8B, FIG. 11A, and FIG. 11B, and the application 1 in the example shown in FIG. 12A to FIG. 12F. The payment application may be, for example, the application 2 in the example shown in FIG. 12A to FIG. 12F. The video conferencing application may be, for example, the application 3 in the example shown in FIG. 12A to FIG. 12F. The smart assistant may be, for example, the smart assistant in the example shown in FIG. 5.

It may be understood that the smart assistant and the quick code display application may be an application, or may be a service. For example, after the electronic device is powered on, a service of the quick code display application is started, so that the service of the quick code display application runs in a background. This is not specifically limited in this application.

An application such as quick code display that can start a plurality of other applications may be used to start the social application, the payment application, the video conferencing application, the navigation, or the like. The social application and the payment application may be used to provide functions such as providing a payment code, scanning, providing a collection code, and travel. The video conferencing application may be used to provide functions such as providing a payment code, scanning, providing a collection code, and clock-in/clock-out. The electronic device may display, in a target window of quick code display, pictures corresponding to various functions in the social application, the payment application, or the video conferencing application.

For example, the smart assistant may also be referred to as a YOYO suggestion, which may be understood as an application, or may be understood as an independent window. The independent window may also be referred to as a YOYO window. The independent window may be understood as follows: The window is not a window in a specific application program opened by the user, but may be an independent window provided by a system of the electronic device. The independent window may cover above any application page displayed by the electronic device. A task entry of one or more applications may be embedded into the independent window. When a task in the independent window is executed, a new task may be created or a task may be reused for an application program corresponding to the task. With the independent window, the social application, the payment application, the navigation, and the like may be started, so that a picture of the social application, the payment application, or the navigation may be embedded into the independent window.

When another application is started by creating a new task, execution of the newly created task may be independent of execution of another running task, so that when a picture of another application is embedded into the independent window, running of any application displayed on the electronic device is not easily interrupted. This may ensure that invoking of the window does not affect a current operation of the user, thereby improving user experience. For example, when the user is watching a video or playing a game by using the electronic device, if the user triggers the electronic device to display the window, the video and the game may not be interrupted when the window is displayed.

It should be understood that the quick code display application and the smart assistant are merely examples, and the electronic device may alternatively include another application that can start a plurality of applications, which is not shown one by one herein.

It should be further understood that the name of the application shown in this embodiment of this application is merely an example, and the names of the applications may alternatively be replaced with other names. For example, quick code display may be referred to as smart code display or the like. This is not specifically limited in this embodiment of this application.

The application framework layer provides an application programming interface (application programming interface, API) and a programming framework for an application at the application layer. The application framework layer includes some predefined functions. As shown in FIG. 13, the application framework layer may include an embedded management module, a non-embedded management module, an activity task management module, a window management module, a view management module, a layer management module, and the like.

The embedded management module may be understood as an API used to start an activity that needs to be embedded into a target window, that is, an API for starting an activity in an embedded manner. The embedded management module may set an activity option of an activity. The embedded management module may further indicate the layer management module to set a task a as a child node of a view 1 of the target window.

It should be understood that the activity option of the activity may alternatively be understood as a start parameter of the activity. In this embodiment of this application, the activity option of the activity includes an option used to indicate whether the activity is started in an embedded manner, and an option used to indicate that the activity is started in a task creation manner or in a task reusing manner.

The view management module may be configured to create a view that can embed a picture of another application, and may invoke the layer management module to create a layer of the view, for example, create a layer of the view 1.

The non-embedded management module may be understood as an API for starting an activity in a non-embedded manner.

The activity task management module may be configured to start the activity in the task creation manner or in the task reusing manner.

The window management module is configured to manage a window program. The window management module may create a window of the activity. One or more views corresponding to the activity may be laid out in the window, and a layout, a size, and the like of the window may be set.

The layer management module may create a layer of a view, so that the electronic device can display a picture corresponding to the activity. The layer management module may further set a relationship between a task and a view, for example, set the task a as a child node of the view 1.

The Android Runtime includes a kernel library and a virtual machine. The Android runtime is responsible for scheduling and management of an Android system.

The kernel library includes two parts: One part is a functional function that needs to be invoked in a java language, and the other part is an Android kernel library.

The application layer and the application framework layer run in a virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to: manage a display subsystem, and provide fusion of 2D and 3D layers for a plurality of applications.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer is configured to drive hardware, so that the hardware works. The kernel layer includes at least a display driver, a graphics processing unit (graphics processing unit, GPU) driver, and the like. For example, the display driver may drive the display screen to display a picture corresponding to the activity a, and the like.

It should be noted that the software architecture shown in FIG. 13 is merely an example. The electronic device may further include more software modules that are not shown in FIG. 13. For example, the application layer may further include applications such as a camera and music. The kernel layer may further include a camera driver and the like. In addition, the electronic device may further include more layers, such as a hardware abstraction layer (hardware abstraction layer, HAL). The software architecture shown in FIG. 13 does not constitute a limitation on this embodiment of this application.

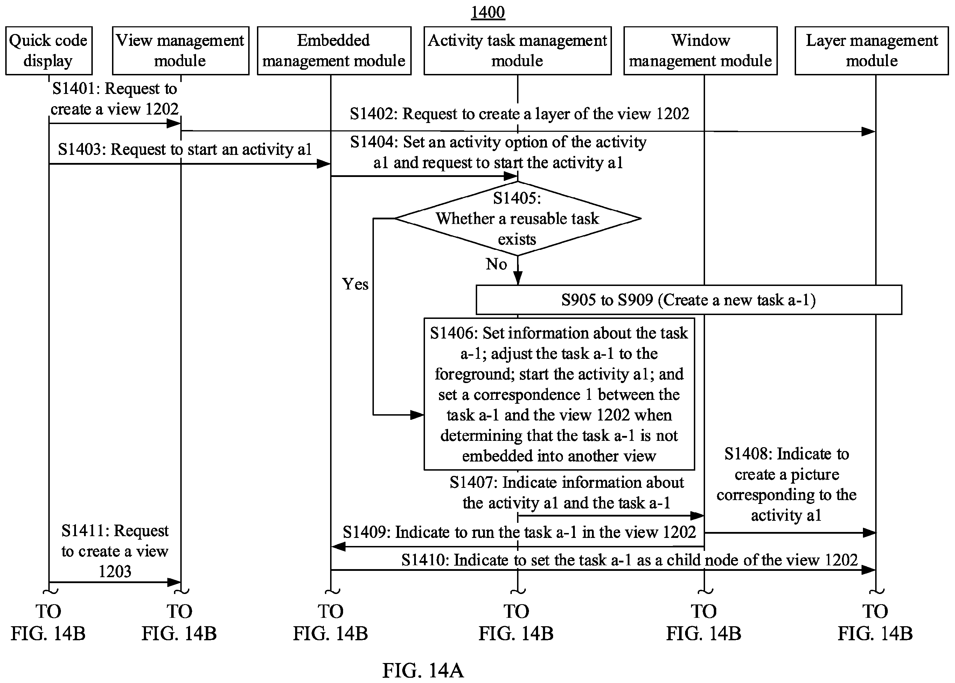

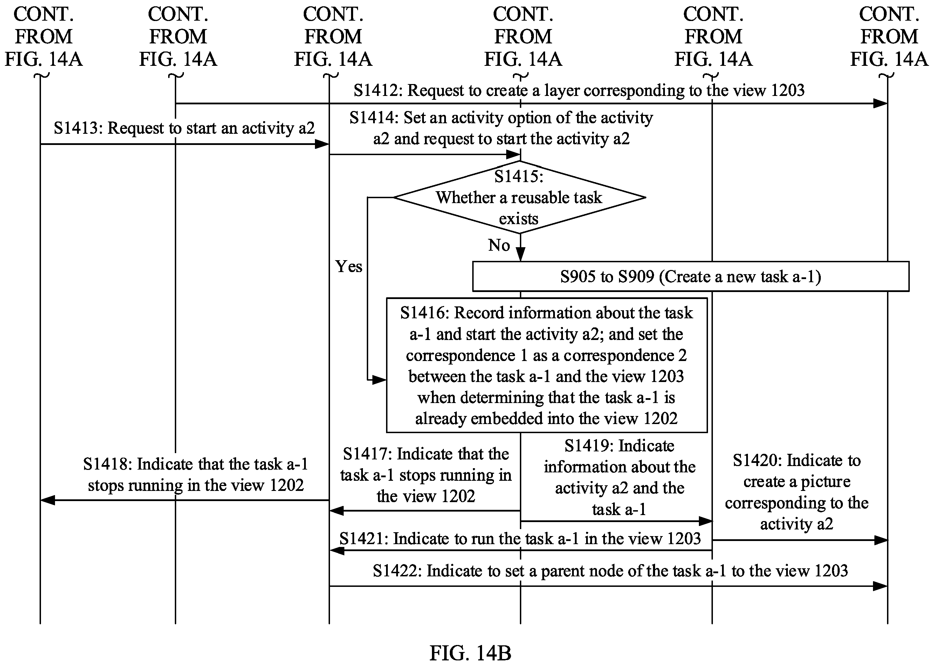

With reference to FIG. 14A and FIG. 14B, the following describes, from a perspective of interaction between software modules that are shown in FIG. 13 and that are included in the electronic device, a method for embedding a picture corresponding to a payment code function of an application 1 into a window 1201 of a quick code display application, by using an example in which an application a is an application 1 shown in FIG. 12A to FIG. 12F and an application b is a quick code display application shown in FIG. 12A to FIG. 12F.

An embedded view of the quick code display application includes a view 1202, and a picture corresponding to the payment code function of the application 1 may be embedded into the view 1202. The payment code function of the application 1 corresponds to an activity al. To be specific, the activity a1 is started by using a method 1400, and the electronic device may display an interface shown in an interface in FIG. 12A.

For ease of understanding, first it should be noted that before the method 1400 is performed, that is, before the picture corresponding to the payment code function of the application 1 is embedded into the window 1201 of the quick code display application, the electronic device runs a task of the application 1 in the background, where the task is, for example, a task a-1. An activity at a stack top of the task a-1 may be an activity 3, and the activity 3 is used to provide a chat interface of the application 1. Therefore, in response to an operation of viewing a multi-task card by the user, the electronic device may display a card of the application 1 running in the background, and the card displays the chat interface. For example, referring to FIG. 11A, the card of the application 1 is shown in the card of the application a.

FIG. 14A and FIG. 14B are schematic flowcharts of an application starting method 1400 according to an embodiment of this application. The process 1400 includes the following steps:

S1401: In response to an operation of enabling a payment code function of an application 1 by a user by using a quick code display application, for example, double-tapping an icon of the quick code display application or double-tapping a backplane of an electronic device, the quick code display application indicates a view management module to create a view 1202. The view 1202 may be used to embed a picture corresponding to the payment code function of the application 1.

The view 1202 may be a view corresponding to a selected collection/payment button in an interface in FIG. 12A. To be specific, the selected collection/payment button (also a view in a window 1201 of the quick code display application) in the interface in FIG. 12A may be associated with the view 1202. Therefore, based on the operation of enabling the payment code function of the application 1 by the user, the quick code display application may request the view management module to create the view 1202.

It may be understood that before S1401, the electronic device may run a service of the quick code display application in the background. The service of the quick code display application may be understood as a component of the quick code display application. When the service of the quick code display application detects the operation of enabling the payment code function of the application 1 by the user, the service of the quick code display application may invoke a window management module to create the window 1201. In addition, the service of the quick code display application may further obtain an xml file, and the xml file records one or more views. The one or more views may include the view 1202. The service of the quick code display application may indicate the view management module to create the view 1202. In addition, the window management module may dispose the view 1202 created by the view management module in the window 1201. In this way, the window 1201 may display a picture in the view 1202.

S1402: The view management module indicates a layer management module to create a layer of the view 1202.

S1403: The quick code display application requests an embedded management module to start an activity a1. The activity a1 is an activity corresponding to the payment code function of the application 1.

For example, the quick code display application invokes, by using the embedded management module, a related method or function in the view 1202 to start the activity a1. In this way, the embedded management module may determine that a picture corresponding to the activity a1 needs to be embedded into the view 1202.

It may be understood that S1403 may also be performed based on the operation of enabling the payment code function of the application 1 by the user. The selected collection/payment button (also a view in the window 1201) in the interface in FIG. 12A may be provided with logic 1. To be specific, when the collection/payment button is selected, a picture in the view 1202 is displayed in the window 1201. The picture in the view 1202 is a picture corresponding to the payment code function of the application 1. Because the payment code function corresponds to an activity a1, the quick code display application requests to start the activity a1. The operation of enabling the payment code function of the application 1 by the user may be associated with the selected collection/payment button in the interface in FIG. 12A. Therefore, based on the operation of enabling the payment code function of the application 1 by the user, the quick code display application may request, by using the view 1202, to start the activity a1.

It should be understood that S1403 and S1401 may be performed concurrently, or S1403 may be performed after or before S1401. This is not specifically limited in this application.

Optionally, the quick code display application may further indicate a parameter 1 or a parameter 2 to the embedded management module.

The parameter 1 is used to indicate to embed the picture corresponding to the activity a1 into the window 1201 in a task reusing manner. The parameter 2 is used to indicate to embed the picture corresponding to the activity a1 into the window 1201 in a task creation manner. For example, the parameter 1 may be 0, and the parameter 2 may be 1. Alternatively, the parameter 1 may be 1, and the parameter 2 may be 0.

The quick code display application may further indicate a parameter 3 to the embedded management module. The parameter 3 is used to indicate a bounds attribute parameter 2 of the picture corresponding to the activity a1. The bounds attribute parameter 2 may be understood as a parameter used to indicate a size and a position of the picture corresponding to the activity a1. The bounds attribute parameter 2 may include coordinates of an upper left corner and coordinates of a lower right corner of the picture corresponding to the activity a1.

Optionally, the electronic device may preset a manner in which the picture corresponding to the payment code function of the application 1 is embedded into the window 1201 of the quick code display application. For example, the electronic device presets information 1, where the information 1 indicates to embed the picture corresponding to the payment code function of the application 1 into the window 1201 of the quick code display application in the task reusing manner.

Assuming that the quick code display application is replaced with a smart assistant shown in FIG. 5, and the application 1 is replaced with a navigation application, the electronic device may preset that the smart assistant embeds the navigation application into a target window in the task creation manner.

In this way, when the navigation application is embedded into a window 501 of the smart assistant in the task creation manner, the electronic device displaying the window 501 has slight impact on another displayed application. For example, with reference to an interface (b) in FIG. 5, the electronic device displays a picture of the navigation application embedded into the window 501, and at the same time, the note application is still displayed on the display screen in full screen under the window 501. When the picture corresponding to the payment code function of the application 1 is embedded into the window 1201 in the task reusing manner, power consumption of the electronic device is relatively low, and the activity a1 may exist as a single instance. Therefore, a possibility of crash of the application 1 is relatively low, and a success rate of displaying, by the electronic device, the picture corresponding to the payment code function of the application 1 embedded into the window 1201 is relatively high.

S1404: The embedded management module sets an activity option of the activity a1, and requests an activity task management module to start the activity a1.

The activity option of the activity a1 may include an option 1, and the option 1 is used to set to start the activity a1 in an embedded manner or to start the activity a1 in a non-embedded manner. It may be understood that, based on an operation of invoking the embedded management module by the quick code display application, the embedded management module may determine that the activity a1 needs to be started in the embedded manner. Therefore, the embedded management module may set the option 1 to information used to indicate to start the activity a1 in the embedded manner. The information used to indicate to start the activity a1 in the embedded manner may be, for example, true or 1. In this way, the activity task management module may determine, based on the option 1, to start the activity a1 in the embedded manner.

The activity option of the activity a1 may further include an option 2, and the option 2 is used to set a bounds attribute parameter 2 of the picture corresponding to the activity a1. The embedded management module may set the option 2 based on the parameter 3 indicated by the quick code display application. In this way, the activity task management module may indicate, based on the option 2, the window management module to adjust a position and a size of the picture corresponding to the activity a1.

The activity option of the activity a1 may further include an option 3, and the option 3 is used to set information indicating a view 1202 into which the picture corresponding to the activity a1 needs to be embedded, that is, the option 3 may set the information used to indicate the view 1202. For example, the embedded management module may determine, based on that the quick code display application requests, by using the view 1202, to start the activity a1 in S1403, that the picture corresponding to the activity a1 needs to be embedded into the view 1202, and further, may set the option 3 to the information used to indicate the view 1202.

The activity option of the activity a1 may further include an option 4, and the option 4 is used to set that the picture corresponding to the activity a1 is embedded into the view 1202 in the task creation manner or the task reusing manner. The embedded management module may set, based on the parameter 1 indicated by the quick code display application, the option 4 to information that is used to indicate to start the activity a1 in the task reusing manner. Alternatively, the embedded management module may set, based on the parameter 2 indicated by the quick code display application, the option 4 to information that is used to indicate to start the activity a1 in the task creation manner. In this way, the activity task management module may determine, based on the option 4, to start the activity a1 in the task creation manner or in the task reusing manner.

It should be understood that the activity option of the activity a1 may also be referred to as a start parameter of the activity a1, and may be used to set a plurality of types of parameters that need to be based on by the activity task management module to start the activity a1. The activity option of the activity a1 may further include a plurality of other options used to set a name and a URI of the activity a1, an option of task affinity of the activity a, or the like. The other options included in the activity option of the activity a1 are not specifically limited in this application.

When the embedded management module sets, based on the parameter 2, the option 4 to indicate to start the activity a1 in the task creation manner, the electronic device may perform S905 to S909, and replace the activity a in S905 to S909 with the activity a1, and the task a with the task a-1.

When the embedded management module sets, based on the parameter 1, the option 4 to indicate to start the activity a1 in the task reusing manner, the electronic device performs S1405, that is, the activity task management module determines whether a reusable task exists.

In one case, the activity task management module determines that no reusable task exists, and the electronic device may perform S905 to S909, that is, embed the picture corresponding to the activity a1 into the view 1202 in the task creation manner, and replace the activity a in S905 to S909 with the activity a1, and the task a with the task a-1.

In another case, the activity task management module determines that a reusable task exists, and the electronic device may perform S1406 to S1410.

It should be understood that the activity task management module determines that a reusable task exists, by searching, from a task running in the electronic device, whether there is a task that may be reused to start the activity a1. This process is unrelated to whether the activity a1 is included in this task. For example, the task that may be reused to start the activity a1 is the task a-1. When the task a-1 runs in the background, the task a-1 may include the activity a1, and in addition to the activity a1, the task a-1 may further include one or more other activities. Alternatively, the task a-1 may not include the activity al, but the task a-1 includes one or more other activities, and the like.

Optionally, S1405 may be implemented, for example, in one of the following two manners: The activity task management module determines whether there is a task that has the same task affinity as the activity a1 in the task running in the electronic device. If yes, the task that has the same task affinity as the activity a1 is a reusable task. Otherwise, there is no reusable task. Alternatively, the activity option of the activity a1 further includes an option 5, and the option 5 may set information that is used to indicate to manage a task of the activity a1. In this way, the activity task management module may also determine, based on the option 5, whether the task indicated by the option 5 exists in the task running in the electronic device. If yes, the task indicated by the option 5 is a reusable task. Otherwise, there is no reusable task.

The task affinity of the activity a1 may alternatively be understood as an attribute of the activity a1, and may be recorded in the activity option of the activity a1. Attribute information of each task running in the electronic device includes task affinity of the task. The task affinity may be, for example, a package name of an application. The electronic device may start an activity by reusing a task having the same task affinity as the activity.

S1406: The activity task management module adjusts the task a-1 to the foreground, and starts the activity a1 in the task a-1. In addition, the activity task management module further records information about the task a-1, and sets a correspondence 1 between the task a-1 and the view 1202 when determining that the task a-1 is not embedded into another view. The correspondence 1 is used to indicate to run the task a-1 in the view 1202.

In this way, in response to adjusting the task a-1 to the foreground, the electronic device no longer runs the task a-1 in the background. In response to an operation of viewing a multi-task card by the user, the multi-task card does not include a card that displays a chat interface of the application 1.

It may be understood that, when the task a-1 includes the activity a1, the activity task management module may adjust the activity a1 to a stack top of the task a-1. When the task a-1 does not include the activity a1, the activity task management module starts the activity a1 in the task a-1.

The information about the task a-1 may include, for example, information used to indicate the task a-1, such as an ID of the task a-1; and/or display state information of the task a-1, where the display state information of the task a-1 is used to describe a display state of a picture corresponding to the task a-1 in a process of running in the background. For example, the display state information may indicate that the picture corresponding to the task a-1 runs in the background in a state such as a split screen, a full screen, or a floating window. This helps ensure that in a subsequent unembedding process, the task a-1 may be restored to a state before the task a-1 is reused.

The correspondence 1 may be set, for example, in the following manner: An object that can be transmitted across processes is set, where the object that can be transmitted across processes is used to indicate the view 1202. Alternatively, a flag bit 1 is set to information that is used to indicate the view 1202, and the flag bit 1 is used to record a parent node of the task a-1.

Optionally, that the activity task management module determines that the task a-1 is not embedded into another view may be implemented in the following manner: The activity task management module determines that a flag bit x sets information that is used to indicate that the task a-1 exists in a non-embedded state. The non-embedded state may represent that the parent node of the task a-1 is a default task display area.

It should be noted that in S1406, the activity task management module may determine that the activity a1 needs to be started in an embedded manner. Therefore, when determining that the task a-1 is not embedded into another view, the activity task management module may further set the flag bit x to information that is used to indicate that the task a-1 exists in an embedded state. In this way, when the activity task management module reuses the task a-1 next time, it may be determined that the task a-1 exists in an embedded state. The embedded state may be understood as that the task a-1 runs in a view of another application, or the parent node of the task a-1 is a view of another application, or the parent node of the task a-1 is none (none), or the like.

In an optional embodiment, in S1406, when the activity task management module determines that the task a-1 is in an embedded state, the activity task management module may further determine which view is the parent node of the task a-1.

In a possible manner, the activity task management module determines that the parent node of the task a-1 is none (none), and in this case, the activity task management module may set the correspondence 1 between the task a-1 and the view 1202, and may set the parent node of the task a-1 to the view 1202 by using S1409 and S1410, so that a picture corresponding to the activity a1 is displayed in the view 1202.

In another possible manner, when the activity task management module determines that the parent node of the task a-1 is another view, the activity task management module may modify a correspondence between the task a-1 and the another view to the correspondence 1, and the electronic device may embed the picture corresponding to the activity a1 into the view 1202 by using the implementation of S1416 to S1422.

S1407: The activity task management module indicates information about the activity a1 and the task a-1 to the window management module.

The information about the activity a1 and the task a-1 may include a bounds attribute parameter 2 of the picture corresponding to the activity a1, information used to indicate to embed the picture corresponding to the activity a1 into the view 1202, information used to indicate the activity a1, and information used to indicate the task a-1.

The information used to indicate the activity a1 may be, for example, a name of the activity a1, and the information used to indicate the task a-1 may be, for example, an ID of the task a. The information used to indicate to embed the picture corresponding to the activity a1 into the view 1202 may be, for example, setting an object that can be transmitted across processes. The object that can be transmitted across processes may be used to indicate the view 1202.

In response to the indication from the activity task management module, the window management module may create a window of the activity a1, and may set a size and a position of the window based on the bounds attribute parameter 2. One or more views of the activity a1 may be disposed in the window.

S1408: The window management module indicates the layer management module to create a picture corresponding to the activity a1.

In one case, if before the task a-1 is reused, that is, when the task a-1 runs in the background, and if the task a-1 does not include the activity a1, the layer management module may draw a layer of the view 1202. The view 1202 is one or more views of the activity a1. The layer of the view 1202 is a visual layer drawn in the view 1202. In addition, the layer management module may further create a layer of the activity a1, and set the layer of the activity a1 as a parent node of the layer of the view 1202. In this way, through setting of a Z-Order parameter of the layer of the activity a1, the layer of the activity a1 may be adjusted to be above a layer of another activity in the task a-1, so that the electronic device can display the picture corresponding to the activity a1.

In another case, if before the task a-1 is reused, that is, when the task a-1 runs in the background, and if the task a-1 includes the activity a1, the layer management module may set a position of the layer of the view 1202 (for example, the position of the layer of the view 1202 is set by setting the Z-Order parameter of the layer of the activity a1), so that the electronic device can display the layer of the view 1202 (namely, the picture corresponding to the activity a1).

S1409: The window management module indicates the embedded management module to run the task a-1 in the view 1202.

It should be understood that S1409 and S 1408 may be performed concurrently, or S1409 may be performed before or after S1408. This is not specifically limited in this application.

S1410: The embedded management module indicates the layer management module to set the task a-1 as a child node of the view 1202. Setting the task a-1 as a child node of the view 1202 may alternatively be replaced with setting the view 1202 as a parent node of the task a-1, or the like.

On the basis of the foregoing embodiment, optionally, the embedded management module or the window management module may further indicate the layer management module to set an attribute of the task a-1, for example, set the task a-1 to be visible. A size, a position, and the like of the layer of the task a-1 may be further set based on the bounds attribute parameter 2. In this way, the layer of the task a-1 is a parent node of the layer of the activity a1, and the layer of the activity a1 is a parent node of a layer in a window of the activity a1, so that the layer management module may set the picture corresponding to the activity a1 to be visible, and may set a size and a position of the picture corresponding to the activity a1. This ensures that the picture corresponding to the activity a1 is displayed in the view 1202.

It may be understood that, although it is pointed out in S1410 that the task a-1 is set as a child node of the view 1202, the layer management module actually sets the layer of the task a-1 as a child node of the layer of the view 1202 from a perspective of an interface displayed by the electronic device. In this embodiment of this application, for brevity of description, setting the layer of the task a-1 as a child node of the layer of the view 1202 is referred to as setting the task a-1 as a child node of the view 1202. This description does not constitute a limitation on this embodiment of this application.

It should be further understood that, in this embodiment of this application, the layer management module setting an attribute of a task may alternatively be understood as the layer management module setting an attribute of a layer of the task. The layer management module setting a size and a position of a picture corresponding to an activity (for example, an activity a) may alternatively be understood as the layer management module setting a size and a position of a layer of a task (for example, a task a), where the task a includes the activity a. This is not specifically limited in this application.

By using S1401 to S1410, the electronic device may display the interface in FIG. 12A. Before the method 1400 is performed, the application 1 displays the chat interface in the background, and after the payment code function of the application 1 is embedded into the window 1201 of the quick code display application in the task reusing manner, the application 1 switches from the background to the foreground, and the application 1 also switches from displaying the chat interface to displaying the picture corresponding to the payment code function.

However, with reference to FIG. 12A to FIG. 12F, the window 1201 of the quick code display application may further embed a picture corresponding to another function of the application 1, for example, a picture corresponding to a scan function shown in an interface in FIG. 12B. Therefore, after S1410, the electronic device may alternatively continue to display the interface in FIG. 12B in response to an operation of tapping a scan button by the user in the interface in FIG. 12A. In response to the operation of tapping the scan button by the user in the interface in FIG. 12A, a process of switching from the interface in FIG. 12A to the interface in FIG. 12B may be implemented by using S1411 to S1422.

In the interface in FIG. 12B, the scan function of the application 1 corresponds to an activity a2 of the application 1, and the activity a2 may also be started by reusing the task a-1.

S1411: In response to an operation of tapping a scan button by a user in an interface in FIG. 12A, a quick code display application indicates a view management module to create a view 1203 in a window 1201 of the quick code display application. The view 1203 may be used to embed a picture corresponding to the scan function of the application 1.

The view 1203 may be a view corresponding to a selected scan button in the interface in FIG. 12A.

It may be understood that after the view management module creates the view 1203, a window management module may dispose the view 1203 in the window 1201, and the window management module may further remove a view 1202, so that the electronic device may not display a picture in the view 1202.

S1412: The view management module indicates a layer management module to create a layer of the view 1203.

S1413: The quick code display application requests an embedded management module to start an activity a2.

For example, the quick code display invokes, by using the embedded management module, a related method or function in the view 1203 to start the activity a2, so that the embedded management module can determine that a picture corresponding to the activity a2 needs to be embedded into the view 1203.

It may be understood that S1413 may also be performed based on the operation of tapping the scan button by the user in the interface in FIG. 12A. The operation of tapping the scan button in the interface in FIG. 12A may be used to indicate to display the picture corresponding to the activity a2, that is, display the picture corresponding to the scan function of the application 1.

It should be understood that S1413 and S1411 may be performed concurrently, or S1413 may be performed before or after S1411. This is not specifically limited in this application.

S1414: The embedded management module sets an activity option of the activity a2, and requests an activity task management module to start the activity a2.

When the embedded management module sets, based on a parameter 2, an option 4 to information that is used to indicate to start the activity a2 in the task creation manner, the electronic device may perform S905 to S909, and replace the activity a in S905 to S909 with the activity a2, and the task a with the task a-1. The option 4 in the activity option of the activity a2 is used to set information indicating to start the activity a2 in a task creation manner, or information indicating to start the activity a2 in a task reusing manner.

When the embedded management module sets, based on the parameter 1, the option 4 to information that is used to indicate to start the activity a2 in the task reusing manner, the electronic device performs S1415, that is, the activity task management module determines whether a reusable task exists.

It is assumed that the activity task management module determines, with reference to the activity option of the activity a2, that a reusable task is the task a-1 running in the foreground.

It should be understood that the implementation of S1411 to S1415 is similar to the implementation of S1401 to S1405. For details, refer to the foregoing description. Details are not described herein again.

S1416: The activity task management module records information about the task a-1, and modifies a correspondence 1 between the task a-1 and the view 1202 to a correspondence 2 between the task a-1 and the view 1203 when determining that the task a-1 is already embedded into the view 1202. The correspondence 2 is used to indicate to run the task a-1 in the view 1203.

For example, the activity task management module may determine, based on the flag bit x that is set in S1406, that the task a-1 exists in the embedded state. In addition, the activity task management module may further determine, in a manner of invoking a function or the like, that the parent node of the task a-1 is the view 1202. Therefore, the activity task management module modifies the correspondence 1 to the correspondence 2.

Optionally, the activity task management module modifying the correspondence 1 to the correspondence 2 may be implemented, for example, in the following manner: An object that can be transmitted across processes and that is used to indicate the view 1202 is updated to an object that can be transmitted across processes and that is used to indicate the view 1203.

S1417: The activity task management module indicates to the embedded management module that the task a-1 stops running in the view 1202.

S1418: The embedded management module indicates to the quick code display application that the task a-1 stops running in the view 1202.

S1419: The activity task management module indicates information about the activity a2 and the task a-1 to the window management module. The information about the activity a2 and the task a-1 includes the correspondence 2.

It should be understood that S1417 and S1419 may be performed concurrently, or S1417 may be performed after or before S1419. This is not specifically limited in this application.

S1420: The window management module indicates the layer management module to create a picture corresponding to the activity a2.

It should be understood that the implementation of S1419 and S1420 is similar to the implementation of S1407 and S1408. For details, refer to the foregoing description. Details are not described herein again.

S1421: The window management module indicates the embedded management module to indicate to set the task a-1 as a child node of the view 1203.

It should be understood that S1421 and S1420 may be performed concurrently, or S1421 may be performed before or after S1420. This is not specifically limited in this application.

It should be further understood that the implementation of S1421 is similar to that of S1409. For details, refer to the foregoing description. Details are not described herein again.

S1422: The embedded management module indicates the layer management module to set the parent node of the task a-1 to the view 1203 from the view 1202.

By using S1411 to S1422, the interface displayed by the electronic device jumps from the interface in FIG. 12A to the interface (b) in FIG. 10.

In addition, with reference to the interface in FIG. 12B and the interface in FIG. 12C, it can be seen that the quick code display may further embed pictures of different applications.

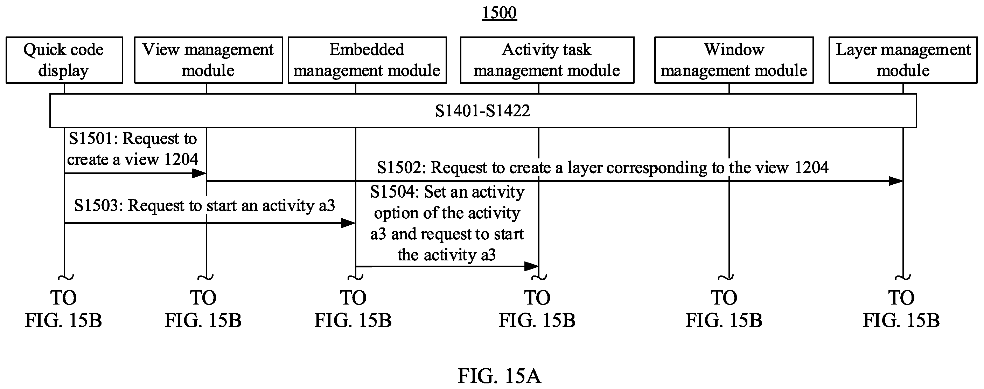

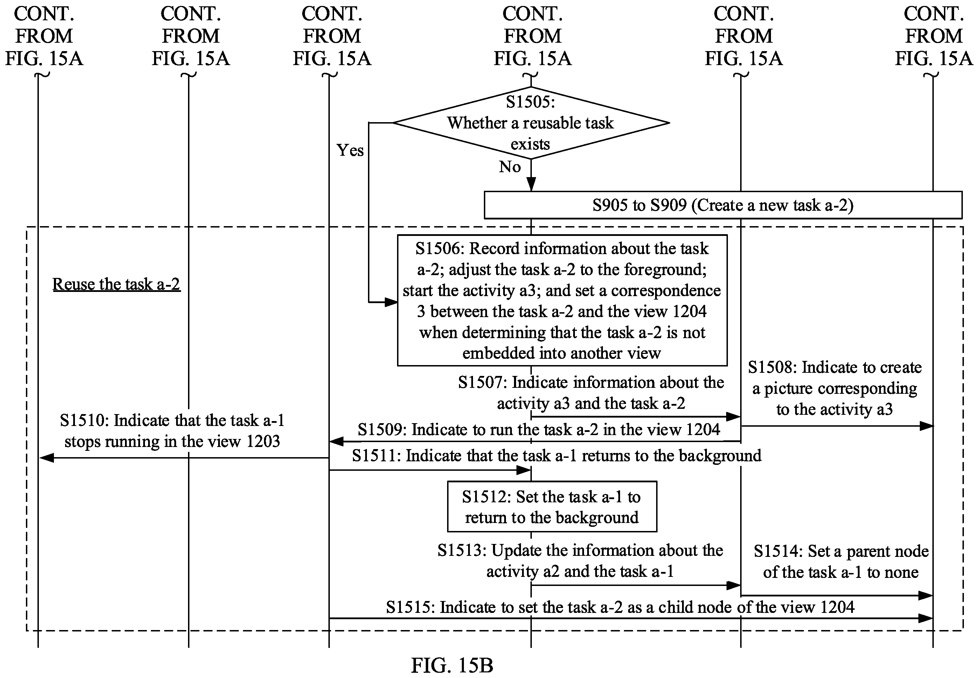

With reference to FIG. 15A and FIG. 15B, the following uses a process from the interface in FIG. 12B to the interface in FIG. 12C as an example to describe a process in which different views in a window 1201 embed layers of different activities of different applications.

The interface in FIG. 12C includes a picture corresponding to a payment code function of an application 2. The payment code function of the application 2 corresponds to an activity a3 of the application 2. An embedded view of the window 1201 of the quick code display application includes a view 1204, and the view 1204 may be used to embed a picture corresponding to the payment code function of the application 2.

It should be noted that before the electronic device performs a method 1500, the electronic device runs a payment application 2 (the application 2 shown in FIG. 12A to FIG. 12F) in the background, that is, the electronic device runs a task of the application 2 in the background, where the task is, for example, a task a-2. It is assumed that an activity at a stack top of the task a-2 is an activity 4, and the activity 4 is used to provide a main interface of the application 2. In this case, in response to an operation of viewing a multi-task card by the user, the multi-task card includes a card of the application 2, and the card of the application 2 displays the main interface of the application 2.

FIG. 15A and FIG. 15B are schematic flowcharts of another application starting method 1500 according to an embodiment of this application. The method 1500 includes the following steps:

First, by using S1401 to S1422, the electronic device displays the interface in FIG. 12B, that is, makes the task a-1 run in the view 1203.

Then, in response to an operation that is in the interface in FIG. 12B and that is used to indicate to start the payment code function in the application 2, the electronic device performs S1501 to S1515. It may be understood that, to enable the window 1201 to display a picture corresponding to the payment code function in the application 2, the electronic device may first unembed the picture corresponding to the scan function of the application 1 from the window 1201 (even if the task a-1 of the application 1 no longer runs in the view 1203). Then, the electronic device embeds the picture corresponding to the payment code function of the application 2 into the window 1201.

S1501: In response to an operation of starting the picture corresponding to the payment code function in the application 2 by the user (for example, an operation of tapping an edit button in the interface in FIG. 12B, and then selecting the payment code function of the application 2), the quick code display application indicates the view management module to create a view 1204. The view 1204 may be used to embed the picture corresponding to the payment code function of the application 2.

It may be understood that after the view management module creates the view 1204, a window management module may dispose the view 1204 in the window 1201, and the window management module may further remove a view 1203, so that the electronic device may not display a picture in the view 1203.

S1502: The view management module indicates a layer management module to create a layer of the view 1204.

S1503: The quick code display requests the embedded management module to start an activity a3 of the application 2, where the activity a3 corresponds to the payment code function of the application 2.

It should be understood that S1503 and S1501 may be performed concurrently, or S1503 may be performed before or after S1501. This is not specifically limited in this application.

S1504: The embedded management module sets an activity option of the activity a3, and requests the activity task management module to start the activity a3.

S1505: The activity task management module determines whether a reusable task exists.

If yes, perform S1506 to S1515.

If no, perform S905 to S909, and replace the activity a in S905 to S909 with the activity a3, and the task a with the task a-2.

In addition, optionally, when no reusable task exists, the electronic device may alternatively ensure, by using S1510 to S1515, that the window 1201 no longer embeds the picture corresponding to the activity a2. This ensures that the interface displayed by the electronic device does not simultaneously include the picture corresponding to the activity a2 and the picture corresponding to the activity a3. This may reduce a case in which the picture corresponding to the activity a2 overlaps the picture corresponding to the activity a3, thereby helping improve user experience.

It may be understood that the activity task management module may determine a reusable task in the following manner: The activity option of the activity a3 includes information 2, where the information 2 is used to represent one attribute of a task (for example, task affinity or a name of the task), and the activity a3 may be started in a task that meets the information 2. Then, the activity task management module may determine whether a task that runs in the electronic device includes the task that meets the information 2. It is assumed that the activity task management module determines that the task a-2 meets the information 2. For example, the task affinity of the task a-1 is the task affinity indicated in the information 2, or the name of the task a-2 is the name indicated in the information 2. Therefore, the activity task management module determines that the activity a3 may be started by reusing the task a-2.

It should be noted that the activity task management module determining whether a reusable task exists is based on the information 2 and the attribute of the task running in the background, and is unrelated to whether the task running in the background includes the activity a3. For example, the task a-1 may include the activity a3, or may not include the activity a3.

S1506: The activity task management module records information about the task a-2, and adjusts the task a-2 to the foreground, and the activity task management module starts the activity a3 in the task a-2, or adjusts the activity a3 already in the task a-2 to a stack top.

In addition, when determining that the task a-2 does not embed another view, the activity task management module sets a correspondence 3 between the task a-2 and the view 1204.

S1507: The activity task management module indicates information about the activity a3 and the task a-2 to the window management module. The information about the activity a3 and the task a-2 includes the correspondence 3.

S1508: The window management module indicates the layer management module to create a picture corresponding to the activity a3.

S1509: The window management module indicates the embedded management module to run the task a-2 in the view 1204.

It should be understood that the implementation of S1501 to S1509 is similar to the implementation of S1401 to S1409. For details, refer to the foregoing description. Details are not described herein again.

S1510: The embedded management module indicates to the quick code display application that the task a-1 stops running in the view 1203.

It should be understood that, to ensure that the window 1201 of the quick code display application does not display a plurality of overlapping pictures, thereby providing the user with good visual experience, the window 1201 of the quick code display application may embed a picture corresponding to one activity. Therefore, after the embedded management module determines that the task a-1 is embedded into the view 1203 of the window 1201, the embedded management module indicates to the quick code display application that the task a-1 stops running in the view 1203.

Optionally, the embedded management module may maintain, for example, Table 1, where Table 1 is used to record a view for running a task of another application in the window 1201. For example, Table 1 records that the task a-1 runs in the view 1203. Table 1 may alternatively be replaced with another view that can be used to record that a task of another application runs in the window 1201.

S1511: The embedded management module indicates the activity task management module to return the task a-1 to the background.

S1512: The activity task management module returns the task a-1 to the background, but the task a-1 still remains in an embedded state. To be specific, a flag bit x is still set to information that is used to indicate that the task a-1 exists in the embedded state.

S1513: The activity task management module indicates the window management module to update information about the activity a2 and the task a-1. For example, the window management module deletes information (namely, a correspondence 2) that is used to indicate a correspondence between the task a-1 and the view 1203, and updates a size, a layout, and the like of the window of the activity a2.

S1514: Because the flag bit x is set to the information that is used to indicate that the task a-1 exists in the embedded state, the window management module indicates the layer management module to set the parent node of the task a-1 to none from the view 1203.

In this way, the task a-1 may run in the embedded state in the background. In response to an operation of viewing a multi-task card by the user, a card of the application 1 displayed on the electronic device exists in an embedded state. The card that exists in the embedded state and that is of the application 1 may display a picture corresponding to the scan function of the application 1, or may display a chat interface.

It should be understood that a size or a proportion of the card that exists in the embedded state and that is of the application 1 may be different from a size or a proportion of another application card that exists in a non-embedded state. This is not specifically limited in this application.

Optionally, in S1512, the activity task management module may alternatively return the task a-1 in the non-embedded state to the background, and set the flag bit x to the information that is used to indicate that the task a-1 exists in a non-embedded state. In addition, the activity task management module sets a display state of the task a-1 to a state of full-screen display, so that the picture corresponding to the task a-1 may run in a state of full-screen display in the background. Alternatively, the activity task management module sets the display state of the task a-1 to a state that is indicated by the display state information of the task a-1 recorded in S1406. This ensures that the picture corresponding to the task a-1 may be displayed in a state before the task a-1 is reused, and the task a-1 may run in the background in the state before the task a-1 is reused.

Correspondingly, in S1514, because the flag bit x is set to information that is used to indicate that the task a-1 exists in the non-embedded state, the window management module indicates the layer management module to set the parent node of the task a-1 to a default task display area from the view 1203.

S1515: The embedded management module indicates the layer management module to set the parent node of the task a-2 to the view 1204.

It may be understood that S1515 may be performed concurrently with S1511 and S1510, or the S1515 may be performed after S1511 and S1510. This is not specifically limited in this application.

It should be understood that, by using S1501 to S1515, the interface displayed by the electronic device may be switched from the interface in FIG. 12B to the interface in FIG. 12C. In addition, because the electronic device embeds, in a task reusing manner, the picture corresponding to the payment code function of the application 2 into the window 1201 of the quick code display application, the task a-2 of the application 2 running in the background is switched from the background to the foreground for running, and the application 2 is switched from displaying a main interface to displaying a picture corresponding to the payment code function.

In an optional embodiment, the electronic device may alternatively ensure, by using S1401 to S1410 and S1501 to S1509, that the interface displayed by the electronic device jumps from the interface in FIG. 12A to the interface in FIG. 12C. For details, refer to the foregoing description. Details are not described herein again.

It should be noted that the method 1400 and the method 1500 respectively show a process of embedding pictures corresponding to different functions of a same application in the window 1201 of the quick code display application and a process of embedding pictures of different applications.

In some possible implementations, the electronic device may further run a same task in views of different applications. For example, the task a-1 of the application 1 is running in the window 1201 of the quick code display application (for example, a scan picture of the application 1 is embedded into the quick code display application). Then, the smart assistant embeds the task a-1 of the application 1 in a manner of reusing the task a-1 (the smart assistant embeds another scan picture of the application 1). For the smart assistant, refer to the smart assistant shown in FIG. 5, for example. It is assumed that another view may be further laid out in a window 501 of the smart assistant, the another view is, for example, referred to as a view 505, and a scan picture of the application 1 may be displayed in the view 505.

In this scenario, because the parent node of the task a-1 is the view 1203 of the quick code display application, the electronic device needs to first make the task a-1 no longer run in the view 1203 of the quick code display application, and then make the task a-1 run in the view 505 of the smart assistant.

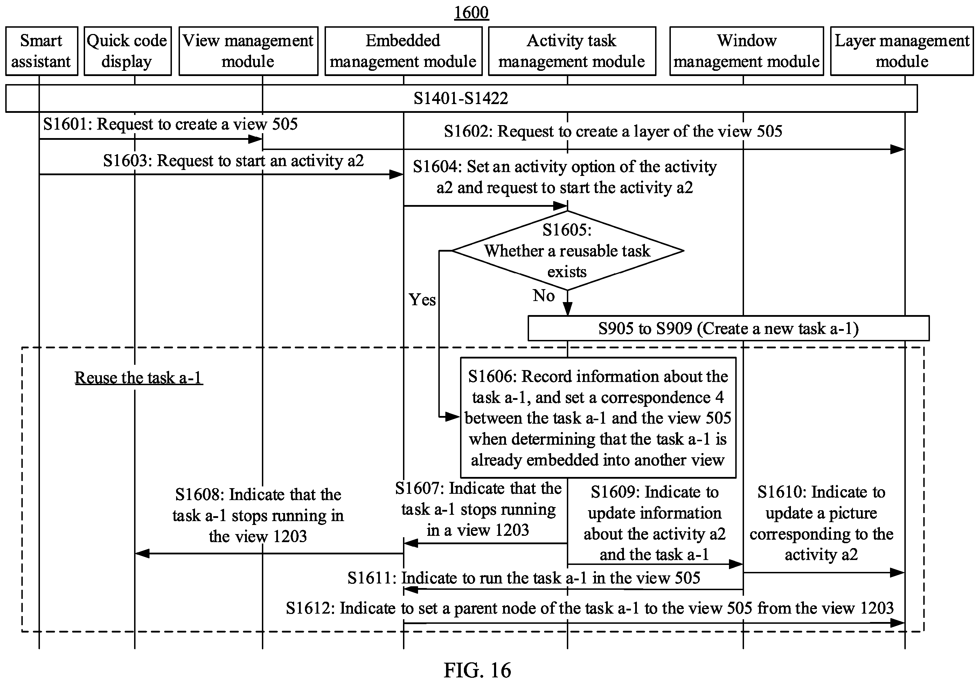

With reference to FIG. 16, the following describes a process of embedding a picture corresponding to the scan function of the application 2 into the view 505 of the smart assistant when the picture corresponding to the scan function of the application 2 is already embedded into the view 1203 of the quick code display application. To be specific, the electronic device jumps from the interface in FIG. 12B to another interface, where the another interface is similar to the interface (b) in FIG. 5. The another interface differs from the interface (b) in FIG. 5 in that the window 501 displays the view 505, and the view 505 displays a picture corresponding to the scan function of the application 1 in FIG. 12A to FIG. 12F.

FIG. 16 is a schematic flowchart of still another application starting method 1600 according to an embodiment of this application. The method 1600 includes the following steps:

First, the electronic device embeds, by using S1401 to S1422, the picture corresponding to the scan function of the application 1 into the view 1203 of the window 1201 of quick code display.

In response to an operation of indicating, by the user, to enable the scan function of the application 1 by using the smart assistant, the electronic device performs S1601 to S1612. The scan function of the application 1 corresponds to the activity a2 of the application 1.

S1601: The smart assistant indicates a view management module to create a view 505. The view 505 may be used to embed a picture corresponding to the scan function of the application 1.

S1602: The view management module indicates a layer management module to create a layer of the view 505.

S1603: The smart assistant requests an embedded management module to start an activity a2.

S1604: The embedded management module sets an activity option of the activity a2, and requests an activity task management module to start the activity a2.

S1605: The activity task management module determines whether a reusable task exists.

If no reusable task exists, the electronic device may perform S905 to S909, that is, embed the picture corresponding to the activity a2 into the view 505 of the window 501 in a task creation manner, and replace the activity a in S905 to S909 with the activity a2, and the task a with the task a-1.

If a reusable task exists, the electronic device may perform S1606 to S1612.

It may be understood that in this case, the electronic device runs the task a-1 of the application 1 (the task a-1 runs in the view 1203 of the quick code display application) in the foreground. It is assumed that the activity task management module determines that the task a-1 is a reusable task.

S1606: The activity task management module records information about the task a-1, and modifies a correspondence 2 between the task a-1 and the view 1203 to a correspondence 4 between the task a-1 and the view 505 when determining that the task a-1 is already embedded into the view 1203.

In addition, because the activity a2 is located at the stack top of the task a-1, the activity task management module may not need to start the activity a2.

It should be understood that the implementation of S1601 to S1606 is similar to the implementation of S1411 to S1416. For details, refer to the foregoing description. Details are not described herein again.

S1607: The activity task management module indicates to the embedded management module that the task a-1 stops running in the view 1203.

S1608: The embedded management module indicates to the quick code display application that the task a-1 stops running in the view 1203.

Further, the quick code display application may further indicate the window management module to remove the window 1201. The window management module indicates the layer management module to remove the window 1201. The layer management module may set the layer in the window 1201 to be invisible, and in this case, the electronic device no longer displays the window 1201.

S1609: The activity task management module indicates the window management module to update information about the activity a2 and the task a-1. For example, the window management module updates the correspondence 2 to the correspondence 4.

S1610: The window management module indicates the layer management module to update the picture corresponding to the activity a2. For example, a size and a position of the picture corresponding to the activity a2 are updated.

S1611: The window management module indicates the embedded management module to run the task a-1 in the view 505.

S1612: The embedded management module indicates the layer management module to set the parent node of the task a-1 to the view 505 from the view 1203.

It should be understood that the implementation of S1607 to S1612 is similar to the implementation of S1417 to S1422. For details, refer to the foregoing description. Details are not described herein again.

In addition, when the view 1202 of the quick code display application already embeds the picture corresponding to the payment code function (corresponding to the activity a1) of the application 1, a process of embedding the picture corresponding to the scan function (corresponding to the activity a2) of the application 1 into the view 505 of the smart assistant is similar to the method 1600. A difference lies in that the electronic device first embeds the picture corresponding to the payment code function (corresponding to the activity a1) into the view 1202 of the quick code display application by using S1401 to S1408, and then embeds the picture corresponding to the scan function (corresponding to the activity a2) into the view 505 of the smart assistant by using S1601 to S1610. For details, refer to the foregoing description. Details are not described herein again.

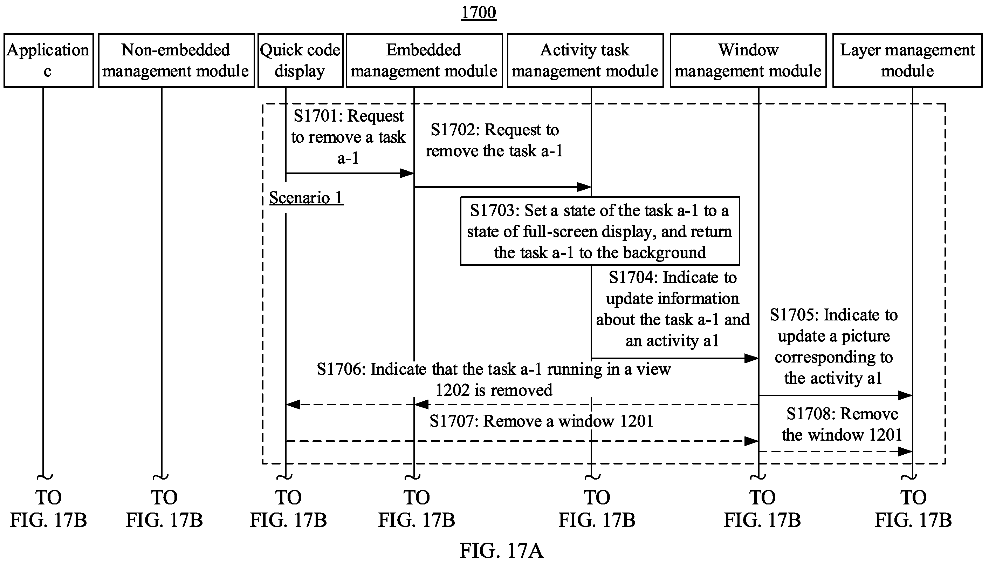

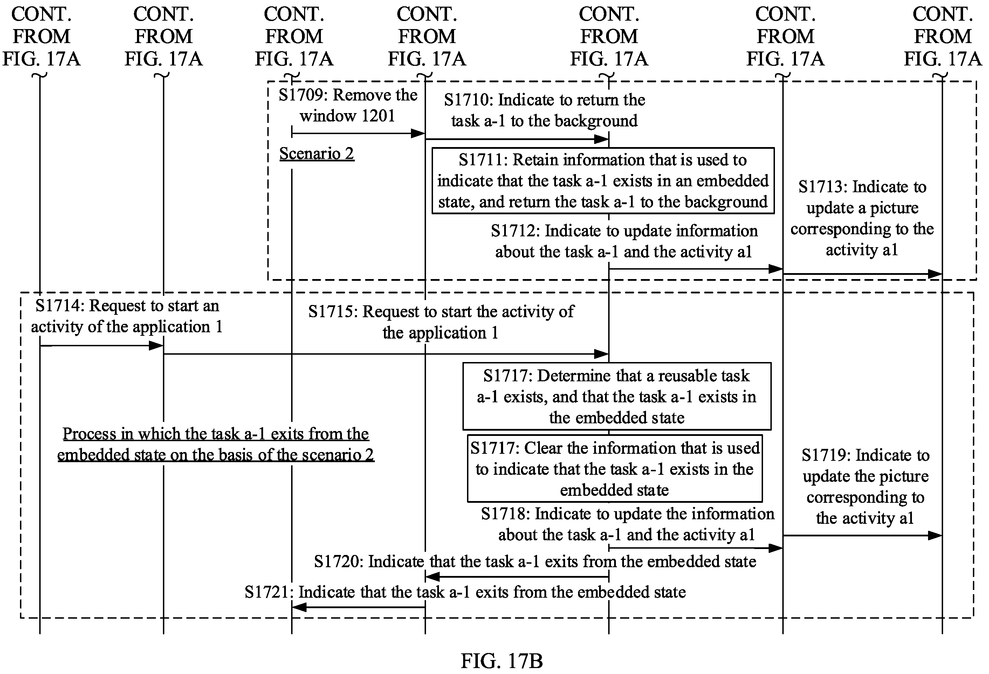

A process in which the electronic device embeds a picture of an application a into a view of an application b in several different scenarios has been described above. With reference to FIG. 17A and FIG. 17B, the following describes a process of unembedding the picture corresponding to the application a from the view of the application b, by using a process of unembedding the picture corresponding to the payment code function of the application 1 shown in FIG. 12A to FIG. 12F from the view 1202 of the quick code display application as an example. To be specific, a step in FIG. 17A and FIG. 17B may be performed after S1410 in the method 1400.

It may be understood that when the electronic device embeds, in the task creation manner, the picture corresponding to the payment code function of the application 1 into the view 1202 of the quick code display application, the electronic device may unembed, in a manner of S910 to S914, the picture corresponding to the payment code function of the application 1 from the view 1202 of the quick code display application. When the electronic device embeds, in the task reusing manner, the picture corresponding to the payment code function of the application 1 into the view 1202 of the quick code display application, for a process of unembedding the picture corresponding to the payment code function of the application 1 from the view 1202 of the quick code display application, refer to a method 1700. The method 1700 includes the following two scenarios: a scenario 1 and a scenario 2.

First, it should be noted that, for ease of understanding, the foregoing description is provided in a manner of embedding the picture corresponding to the payment code function of the application 1 into the view 1202 of the quick code display application. Actually, embedding the picture corresponding to the payment code function of the application 1 into the view 1202 of the quick code display application is running the task a-1 of the application 1 in the view 1202, where an activity at the stack top of the task a-1 is the activity a1 (corresponding to the payment code function). Therefore, unembedding the picture corresponding to the payment code function of the application 1 from the view 1202 of the quick code display application is stopping running the task a-1 in the view 1202.

The scenario 1 is a scenario of disabling the payment code function of the application 1. To be specific, in response to an operation of disabling the payment code function of the application 1 by the user (for example, tapping a blank area in the window 1201 or tapping a return button in an upper part of the view 1202), the view 1202 no longer displays the picture corresponding to the payment code function of the application 1, that is, the task a-1 stops running in the view 1202. In this scenario, the electronic device may still display the window 1201. However, the view 1202 does not display the picture corresponding to the payment code function of the application 1. For example, the view 1202 may display a blank layer or a related view of the quick code display application.

In the scenario 1, the operation of the user is to indicate to disable the payment code function of the application 1. To be specific, the user indicates that the picture corresponding to the payment code function of the application 1 does not need to be embedded into the view 1202 of the quick code display application again. Therefore, in the scenario 1, the electronic device may make the application 1 return to the background in a state before the application 1 is embedded into the view 1202 of the quick code display application, or the electronic device may make the application 1 return to the background in a state of full-screen display. The application 1 returning to the background means that the task a-1 of the application 1 returns to the background.

The scenario 2 is a scenario of closing the quick code display application. Closing the quick code display application is closing the window 1201 of the quick code display application. The window 1201 is removed in response to an operation of closing the window 1201 of the quick code display application by the user (for example, an operation of double-tapping a blank area in the window 1201, or an operation of tapping a button that is used to close the window 1201 and that is included in the window 1201). The window 1201 is a parent node of the view 1202, and the view 1202 is a parent node of the task a-1. Therefore, the picture corresponding to the payment code function of the application 1 is no longer displayed. For example, the electronic device may switch from an interface in FIG. 12A to a home screen.

In the scenario 2, the operation of the user is to indicate to close the window 1201 of the quick code display application, and the user may not indicate to make the picture (namely, the task a-1) corresponding to the payment code function of the application 1 exit from the embedded state. Therefore, in the scenario 2, the task a-1 is unembedded from the view 1202, but the task a-1 is still switched back in the embedded state to the background for running.

FIG. 17A and FIG. 17B are schematic flowcharts of a process 1700 of unembedding an application 1 from a quick code display application in an application starting method according to an embodiment of this application. S1701 to S1705 correspond to the scenario 1, and S1706 to S1710 correspond to the scenario 2.

S1701: A quick code display application requests an embedded management module to remove a task a-1.

For example, the quick code display application may invoke, by using the embedded management module, a related method or function in a view 1202 to remove the task a-1. Removing the task a-1 may alternatively be understood as stopping running the task a-1 in the view 1202.

For example, with reference to an interface shown in FIG. 12A, after detecting an operation of tapping a blank area in a window 1201 by a user, the quick code display application may request the embedded management module to remove the task a-1.

S1702: The embedded management module requests an activity task management module to remove the task a-1. To be specific, the embedded management module indicates to the activity task management module that the task a-1 stops running in the view 1202.

S1703: In response to the request from the embedded management module, the activity task management module sets a state of the task a-1 to a state of full-screen display, and returns the task a-1 to a background.

In addition, the activity task management module further sets a flag bit x to information that is used to indicate that the task a-1 exists in a non-embedded state. The information that is used to indicate that the task a-1 exists in the non-embedded state may be, for example, false or 0.

In some possible implementations, the activity task management module may alternatively set the state of the task a-1 to a state indicated by display state information of the task a-1. It may be understood that the display state information of the task a-1 is information recorded by the activity task management module when starting the activity a1 by reusing the task a-1 (for example, information recorded in S1406), and the information is used to describe a display state of a picture corresponding to the task a-1 when the task a-1 runs in the background (that is, before the task a-1 is reused).

It may be understood that, setting the state of the task a-1 to the state indicated by the display state information of the task a-1 may cause the task a-1 to be restored to the state before the task a-1 is reused. In this way, when the electronic device starts the task a-1 in a non-embedded manner next time, a picture corresponding to the task a-1 may be displayed in a state before the task a-1 is reused, thereby improving user experience.

For example, with reference to FIG. 12A to FIG. 12F, it is assumed that before the electronic device displays the interface in FIG. 12A, the picture corresponding to the task a-1 exists in a form of a floating window. In this case, in a process in which the electronic device composites the interface in FIG. 12A (S1406), the display state information of the task a-1 recorded by the electronic device may indicate that a picture of the application 1 runs in the background in a form of a floating window. In this way, when the electronic device removes the task a-1, the electronic device may return the task a-1 to the background in a form of a floating window. This ensures that the background displays the picture of the application 1 in the form of a floating window, and when the user starts the application 1 next time in a manner such as tapping an icon of the application 1, the application 1 may be displayed in the form of a floating window.

In addition, optionally, the activity task management module may further adjust a sequence of activities managed in the task a-1 or destroy an activity a1, so that the picture corresponding to the task a-1 is still the picture corresponding to the task a-1 before the task a-1 is reused.

For example, when the activity task management module determines that an existent reusable task is the task a-1 (S1405), the task a-1 includes the activity a1, the activity a1 is not located at the stack top, and the activities managed in the task a-1 are in a first rank order. For example, an activity 3 is located at the stack top, and the activity 3 corresponds to a chat interface, that is, a card of the application 1 displays a chat interface. In this case, to start the activity a1, the task management module adjusts the activity a1 to the stack top (S1406) to obtain a second rank order (the activity at the stack top is switched from the activity 3 to the activity a1), so that the application 1 switches from the chat interface to a picture corresponding to a payment code function. Correspondingly, when the task a-1 is returned to the background, the activity task management module also needs to adjust the second rank order of the activities managed by the task a-1 to the first rank order, that is, adjust the activity at the stack top from the activity a1 to the activity 3, so that the application 1 switches from the picture corresponding to the payment code function back to the chat interface. In this way, the card of the application 1 in the background may display the chat interface again.

Alternatively, when the activity task management module determines that the reusable task a-1 exists, and the task a-1 does not include the activity a1, the activity task management module starts the activity a1. For example, the activity at the stack top of the task a-1 that runs in the background is the activity 3, and the activity 3 corresponds to the chat interface. In this case, the card of the application 1 in the background displays the chat interface. After the activity a1 is started, the application 1 switches from the chat interface to the picture corresponding to the payment code function. Correspondingly, when the task a-1 is returned to the background, the activity task management module may alternatively destroy the activity a1, so that the activity 3 is located at the stack top of the task a-1 again, and the application 1 switches from the picture corresponding to the payment code function to the chat interface. In this way, the card of the application 1 in the background may display the chat interface again.

In this way, when the user starts the application 1 next time in a manner such as tapping an icon of the application 1, the electronic device may display the picture corresponding to the task a-1 before the task a-1 is reused. For example, when the user starts the application 1 next time by tapping the icon of the application 1, the electronic device displays the chat interface of the application 1.

It should be noted that, when the task a-1 is in a different state, a size of a displayed picture provided by the task a-1 varies. For example, when the displayed picture provided by the task a-1 is displayed in full screen, a size of the task a-1 may be relatively large. When the task a-1 runs in the view 1202, the size of the task a-1 (a size of the picture of the application 1) may be relatively small. Therefore, after the activity task management module updates the state of the task a-1, the size of the task a-1 is also correspondingly updated, that is, a bounds attribute parameter 2 is updated, for example, a bounds attribute parameter 2 corresponding to the embedded state is updated to a bounds attribute parameter 3 corresponding to a state of full-screen display.

S1704: The activity task management module indicates the window management module to update information about the task a-1 and the activity a1. In addition, the activity task management module indicates, to the window management module, the bounds attribute parameter 3 of the picture corresponding to the activity a1. This ensures that the window management module may update a size and a layout of the window of the activity a1 based on the bounds attribute parameter 3. For example, the size of the window of the activity a1 is set to a size of full-screen display.

In response to the indication of the activity task management module, the window management module may further delete, for example, information such as a correspondence between the task a-1 and the view 1202.

S1705: The window management module indicates the layer management module to update the picture corresponding to the activity a1.

For example, in response to the information that is in the flag bit x and that is used to indicate that the task a-1 exists in the non-embedded state, the window management module further indicates the layer management module to set the parent node of the task a-1 to a default task display area. In this way, the parent node of the task a-1 is no longer the view 1202, and the picture corresponding to the activity a1 is no longer displayed in the view 1202.

In addition, in response to the indication of the window management module, the layer management module may further set the picture corresponding to the activity a1 to be invisible. For example, the task a-1 is set to be invisible. In addition, the window management module may further indicate, based on the bounds attribute parameter 3, the layer management module to set a size, a position, and the like of the picture corresponding to the activity a1. In this way, the layer management module may set the picture corresponding to the activity a1 to a size in the non-embedded state.

In this case, the view 1202 no longer displays the picture corresponding to the activity a1, but the electronic device still displays the window 1201. To be specific, the window 1201 is still displayed on the display screen, but the view 1202 does not display the picture corresponding to the payment code function of the application 1. To improve visual experience of the user, the electronic device may further close the window 1201 by using S1706 to S1708.

S1706: The window management module indicates, by using the embedded management module, to the quick code display application that the task a-1 running in the view 1202 is removed.

S1707: The quick code display indicates the window management module to remove the window 1201.

S1708: The window management module indicates the layer management module to remove the window 1201. In this way, the layer management module may set the layer in the window 1201 to be invisible, and in this case, the electronic device no longer displays the window 1201.

The process of unembedding the picture corresponding to the payment code function of the application 1 from the view 1202 in the scenario 1 has been described above with reference to S1701 to S1708. With reference to S1709 to S1713, the following describes the process of unembedding the picture corresponding to the payment code function of the application 1 from the view 1202 in the scenario 2.

S1709: When the quick code display application detects an operation of closing the window 1201 by the user, the quick code display application requests the embedded management module to remove the window 1201.

For example, with reference to an interface shown in FIG. 12A, the electronic device may close the window 1201 in response to an operation of double-tapping a blank area in the window 1201 by the user. Alternatively, the window 1201 includes a button used to close the window 1201, and the electronic device may close the window 1201 in response to an operation of tapping the button by the user.

In this way, the embedded management module may determine that the window 1201 is removed. Because the window 1201 is a parent node of the view 1202, the embedded management module may also determine that the view 1202 is removed. Because the view 1202 is a parent node of the task a-1, the embedded management module may perform S1710, and in response to an indication of the quick code display application, the embedded management module indicates the activity task management module to return the task a-1 to the background.

It should be understood that a difference from S1702 lies in that in the scenario 1, the user indicates to remove the task a-1 (that is, close a picture corresponding to a payment code function of the application 1), so that the embedded management module indicates the activity task management module to remove the task a-1 in S1702. In this way, the activity task management module may set the task a-1 to be in a non-embedded state. In the scenario 2, the user indicates to remove the window 1201, so that in S1710, the embedded management module indicates the activity task management module to return the task a-1 to the background, that is, does not modify the embedded state of the task a-1.

S1711: In response to the indication of the embedded management module, the activity task management module returns the task a-1 to the background.

It should be noted that because the embedded management module indicates to return the task a-1 to the background, the activity task management module returns the task a-1 to the background, and the activity task management module retains information that is used to indicate that the task a-1 exists in the embedded state. In other words, the activity task management module does not update the flag bit x, and the flag bit x still records the information that is used to indicate that the task a-1 exists in the embedded state.

S1712: The activity task management module indicates the window management module to update information about the task a-1 and the activity a1. For example, a correspondence between the task a-1 and the view 1202 may be deleted.

S1713: The window management module indicates the layer management module to update a picture corresponding to the activity a1.

For example, based on that the flag bit x records the information that is used to indicate that the task a-1 exists in the embedded state, the layer management module may set the parent node of the task a-1 to none (none). In this way, when the electronic device embeds the task a-1 into a view of another application next time in a task reusing manner, the electronic device may determine the parent node of the task a-1 based on that the flag bit x records the information that is used to indicate that the task a-1 exists in the embedded state. When the parent node of the task a-1 is none, the activity task management module sets a correspondence between the task a-1 and the view of the another application, and indicates the layer management module to set the parent node of the task a-1 to the view of the another application. This ensures relatively high efficiency of running the task a-1 in the view of the another application by the electronic device.

In addition, in response to the indication of the window management module, the layer management module may further set the task a-1 to be invisible or the like. This ensures that the picture corresponding to the activity a1 is no longer displayed on the display screen.

In the scenario 2, the task a-1 still remains in the embedded state, that is, the flag bit x records the information that is used to indicate that the task a-1 exists in the embedded state. In this case, the electronic device may also make the task a-1 exit from the embedded state by using S1714 to 1721.

S1714: An application c requests a non-embedded management module to start an activity of the application 1.

For example, the application c may be a home screen launcher (Launcher). In this case, in response to an operation of tapping an icon of the application 1 on the home screen by the user, the home screen launcher requests the non-embedded management module to start the activity of the application 1.

It may be understood that the application 1 is started by using the icon of the application 1, and an interface after the application 1 is started may be an interface when the application 1 runs in the background. For example, the application 1 displays a chat interface in the background. In this case, after the icon of the application 1 is tapped, the electronic device displays the chat interface of the application 1. In this case, the scenario 2 is described by using an example in which the application 1 displays a picture corresponding to a payment code function (corresponding to the activity a1) (that is, the application 1 runs in the embedded state in the background, and the application 1 displays the picture corresponding to the payment code function). Therefore, the activity of the application 1 that the home screen launcher requests to start is the activity a1 (an activity corresponding to the payment code function). Correspondingly, the interface displayed after the application 1 is started is also the picture corresponding to the payment code function.

Alternatively, the application c may be another application, for example, the application c is a short video application. In response to an operation of sharing a link to the chat interface of the application 1 in the short video application by the user, when the chat interface corresponds to the activity 3, the short video application requests the non-embedded management module to start the activity 3. Correspondingly, the interface after the application 1 is started is the chat interface.

Alternatively, the application c may be replaced with a banner notification module, an application that can notify a pop-up window message, or the like. In this case, when the application c detects a notification message of the application 1, the application c may display a pop-up window of the application 1, and the pop-up window is used to prompt the user to receive the notification message of the application 1. In response to an operation of tapping the pop-up window by the user, the application c may request the non-embedded management module to start the activity of the application 1. The activity of the application 1 may be related to a type of the notification message. For example, when the notification message is a chat message, and the activity 3 corresponds to a chat interface, the activity of the application 1 is the activity 3, and correspondingly, the interface displayed after the application 1 is started is the chat interface. When the notification message is a system notification message of the application 1, for example, a message indicating a quantity of moving steps, if an activity 4 of the application 1 corresponds to an interface for displaying the quantity of moving steps, the activity of the application 1 is the activity 4. Correspondingly, after being started, the application 1 displays the interface for the quantity of moving steps.

It should be understood that as shown above, the activity of the application 1 that the application c requests to start is merely an example. In some other scenarios, the application c may alternatively be another application, such as a shopping application. In addition, the activity of the application 1 that the application c requests to start may alternatively be another activity of the application 1. This is not specifically limited in this application.

S1715: The non-embedded management module requests the activity task management module to start the activity of the application 1.

S1716: The activity task management module determines that a reusable task exists, where the reusable task is the task a-1. In addition, it is determined that the task a-1 exists in the embedded state. To be specific, the flag bit x records information that is used to indicate that the task a-1 exists in the embedded state.

S1717: The activity task management module clears the information that is used to indicate that the task a-1 exists in the embedded state. Alternatively, it may be understood that the flag bit x is set to information that is used to indicate that the task a-1 exists in a non-embedded state.

S1718: The activity task management module indicates the window management module to update information about the task a-1 and the activity a1.

S1719: The window management module indicates the layer management module to update the picture corresponding to the activity a1.

It should be understood that the implementation of S1718 and S1719 is similar to the implementation of S1704 and S1705. For details, refer to the foregoing description. Details are not described herein again.

S1720: The activity task management module indicates to the embedded management module that the task a-1 exits from the embedded state.

S1721: The embedded management module indicates to the quick code display application that the task a-1 exits from the embedded state. In this way, when the electronic device runs the task a-1 next time by using the view of the quick code display application, the electronic device may start the application 1 according to a method 1400.

It should be understood that, in the method 1700, description is provided by using an example in which the picture corresponding to the payment code function of the application 1 is unembedded from the window 1201. In some possible implementations, the picture corresponding to the scan function of the application 1, the picture corresponding to the payment code function of the application 2, or the like may be unembedded from the window 1201 in a manner in the method 1700. For brevity, details are not described herein again.

It should be understood that sequence numbers do not mean an execution sequence in the foregoing embodiments. The execution sequence of the processes should be determined based on functions and internal logic of the processes.

The application starting method in the embodiments of this application is described above. An application starting apparatus for performing the method provided in the embodiments of this application is described below. A person skilled in the art may understand that the method and the apparatus may be combined and mutual reference may be made, and that a related apparatus provided in an embodiment of this application may perform the steps in the foregoing list ranking method.

The application starting apparatus may be an electronic device. The following describes a hardware structure of the electronic device.

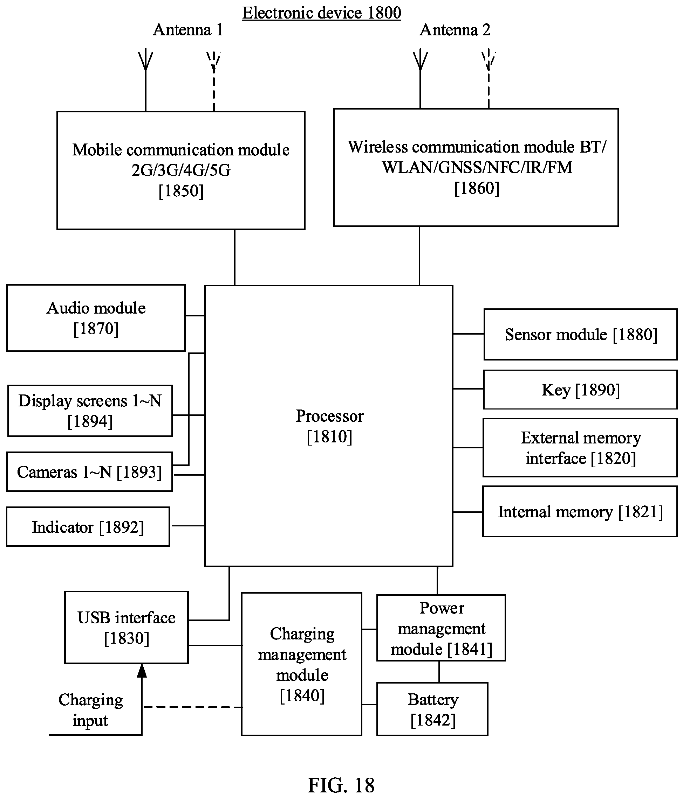

FIG. 18 is a schematic diagram of a structure of an electronic device 1800 according to an embodiment of this application. As shown in FIG. 18, the electronic device 1800 may include a processor 1810, an external memory interface 1820, an internal memory 1821, a universal serial bus (universal serial bus, USB) interface 1830, a charging management module 1840, a power management module 1841, a battery 1842, an antenna 1, an antenna 2, a mobile communication module 1850, a wireless communication module 1860, an audio module 1870, a sensor module 1880, a key 1890, an indicator 1892, a camera 1893, a display screen 1894, and the like.

The audio module 1870 may include but is not limited to a speaker, a telephone receiver, a microphone, a headset jack, and the like.

The sensor module 1880 may include but is not limited to one or more of the following sensors: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application constitutes no specific limitation on the electronic device 1800. In some other embodiments of this application, the electronic device 1800 may include more or fewer components than those shown in the figure, combine some components, split some components, or have different component arrangements. The components shown in the figure may be implemented by hardware, software, or a combination of software and hardware.

The processor 1810 may include one or more processing units. For example, the processor 1810 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Optionally, a memory may be further disposed in the processor 1810 to store instructions and data. Different processing units may be independent devices, or may be integrated into one or more processors.

A wireless communication function of the electronic device 1800 may be implemented by using the antenna 1, the antenna 2, the mobile communication module 1850, the wireless communication module 1860, the modem processor, the baseband processor, and the like.

The electronic device 1800 implements a display function by using the GPU, the display screen 1894, an application processor, and the like. The GPU is a microprocessor for image processing, and connects the display screen 1894 and the application processor. The GPU is configured to perform mathematical and geometric computing for graphics rendering. The processor 1818 may include one or more GPUs, and the one or more GPUs execute program instructions to generate or change displayed information.

The display screen 1894 is configured to display an image, a video, and the like. In some embodiments, the electronic device 1800 may include 1 or N display screens 1894, where N is a positive integer greater than 1.

For example, the application processor may draw, by using the GPU or the like, the layer in the target window and the picture corresponding to the activity a, and may display, by using the display screen 1894, the layer in the target window and the picture corresponding to the activity a above the layer in the target window. A size of the picture corresponding to the activity a is smaller than a size of the display screen.

The external memory interface 1820 may be configured to connect to an external memory card, for example, a Micro SD card, to expand a storage capability of the electronic device 1800. The internal memory 1821 may be configured to store computer-executable program code, and the executable program code includes instructions.

In addition, the application starting apparatus may alternatively be of the following structure.

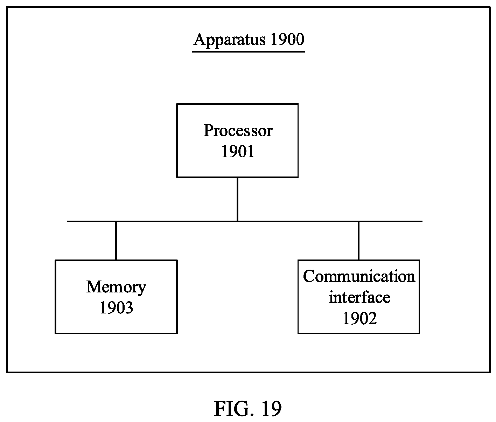

FIG. 19 is a schematic block diagram of an application starting apparatus 1900 according to an embodiment of this application. The apparatus 1900 includes a processor 1901, a communication interface 1902, and a memory 1903. The processor 1901, the communication interface 1902, and the memory 1903 communicate with each other through an internal connection path. The memory 1903 is configured to store instructions. The processor 1901 is configured to execute the instructions stored in the memory 1903. The communication interface 1902 may be configured to send a signal to another apparatus (for example, the processor 1901 or a touchscreen of an electronic device), and may be further configured to receive a signal from another apparatus (for example, the memory 1903). For example, the communication interface 1902 reads the instructions stored in the memory 1903, and sends the instructions to the processor 1901.

It should be understood that the apparatus 1900 may be specifically the electronic device in the foregoing embodiments, and may be configured to perform the steps and/or the procedures corresponding to the electronic device in the foregoing method embodiments. Optionally, the memory 1903 may include a read-only memory and a random access memory, and provides instructions and data to the processor. A part of the memory may further include a nonvolatile random access memory. For example, the memory may further store information about a device type. The processor 1901 may be configured to execute the instructions stored in the memory, and when the processor 1901 executes the instructions stored in the memory, the processor 1901 is configured to perform the steps and/or the procedures in the foregoing method embodiments.

It should be understood that in this embodiment of this application, the processor may be a central processing unit (central processing unit, CPU), and the processor may alternatively be another general-purpose processor, a digital signal processor (DSP), an application-specific integrated circuit (ASIC), a field programmable gate array (FPGA), another programmable logic device, a discrete gate, a transistor logic device, a discrete hardware component, or the like. The general-purpose processor may be a microprocessor, or the processor may be any conventional processor or the like.

In an implementation process, the steps of the foregoing method may be completed by using an integrated logic circuit of hardware in the processor or by using instructions in a form of software. The steps of the method disclosed with reference to the embodiments of this application may be directly performed by a hardware processor, or by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor executes the instructions in the memory, and completes the steps of the foregoing method in combination with hardware in the processor. To avoid repetition, details are not described herein again.

The application starting method provided in the embodiments of this application may be applied to an electronic device having a communication function. The electronic device includes the terminal device. For a specific device form and the like of the terminal device, refer to the foregoing related description. Details are not described herein again.

An embodiment of this application provides an electronic device, where the terminal device includes a processor and a memory. The memory stores computer-executable instructions. The processor executes the computer-executable instructions stored in the memory, so that the terminal device performs the foregoing method.

An embodiment of this application provides a chip. The chip includes a processor, and the processor is configured to invoke a computer program in a memory to execute the technical solutions in the foregoing embodiments. The implementation is similar to the foregoing related embodiments in terms of implementation principles and technical effects. Details are not described herein again.

An embodiment of this application further provides a computer-readable storage medium. The computer-readable storage medium stores a computer program. The foregoing method is implemented when the computer program is executed by a processor. All or some of the methods described in the foregoing embodiments may be implemented by using software, hardware, firmware, or any combination thereof. If implemented in software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (Digital Versatile Disc, DVD), a floppy disk, and a Blu-ray disc, and the magnetic disk usually reproduces data magnetically, while the optical disc reproduces data optically by using a laser. A combination of the foregoing should also be included in the scope of the computer-readable medium.

An embodiment of this application provides a computer program product. The computer program product includes a computer program, and when the computer program is run, a computer is enabled to perform the foregoing method.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. An application starting method, comprising:
when an electronic device runs a first task of a first application in a background, receiving, by the electronic device, a first operation of enabling a first function by a user;
in response to the first operation, displaying, by the electronic device, a first interface of a second application, and running the first task in a first view of the first interface, wherein a first activity at a stack top of the first task corresponds to the first function, and the first task is a child node of the first view; and
when the electronic device displays the first interface, stopping, by the electronic device, running the first task in the background, and running the first task in a foreground.

2. The method according to claim 1, wherein the method further comprises:
when the electronic device displays the first interface, receiving, by the electronic device, a second operation of enabling a second function by the user; and
in response to the second operation, switching, by the electronic device, the first interface to a second interface of the second application, and running the first task in a second view of the second interface, wherein a second activity at the stack top of the first task corresponds to the second function, and the first task is a child node of the second view, wherein
when the electronic device displays the second interface, the electronic device does not run the first task in the background, and the first task running in the first view when the electronic device displays the first interface runs in the second view.

3. The method according to claim 1 or 2, wherein the method further comprises:
when the electronic device runs the first task in the foreground, running, by the electronic device, a second task of a third application in the background;
when the electronic device displays the first interface, receiving, by the electronic device, a third operation of enabling a third function by the user;
in response to the third operation, switching, by the electronic device, the first interface to a third interface of the second application, and running the second task in a third view of the third interface, wherein a third activity at a stack top of the second task corresponds to the third function, and the second task is a child node of the third view; and
when the electronic device displays the third interface, stopping, by the electronic device, running the second task in the background, and running the second task in the foreground, and running, by the electronic device, the first task in the background.

4. The method according to any one of claims 1 to 3, wherein the method further comprises:
when the electronic device displays the first interface, receiving, by the electronic device, a fourth operation of disabling the first function by the user;
in response to the fourth operation, switching, by the electronic device, the first interface to a fourth interface; and
when the electronic device displays the fourth interface, running, by the electronic device, the first task in the background in a form of full-screen display, wherein a parent node of the first task is updated from the first view to a default task display area.

5. The method according to any one of claims 1 to 3, wherein the method further comprises:
when the electronic device displays the first interface, receiving, by the electronic device, a fifth operation of disabling the second application by the user;
in response to the fifth operation, switching, by the electronic device, the first interface to a fifth interface; and
when the electronic device displays the fifth interface, running, by the electronic device, the first task in the background, wherein a parent node of the first task is updated from the first view to none.

6. The method according to claim 5, wherein the method further comprises:
when the electronic device runs the first task in the background, and the parent node of the first task is none, receiving, by the electronic device, a sixth operation of enabling a fourth function by the user;
in response to the sixth operation, displaying, by the electronic device, a sixth interface of the first application in full screen by running the first task, wherein a fourth activity at the stack top of the first task corresponds to the fourth function, and the parent node of the first task is a default task display area; and
when the electronic device displays the sixth interface, stopping, by the electronic device, running the first task in the background, and running the first task in the foreground.

7. The method according to any one of claims 1 to 6, wherein the method further comprises:
when the electronic device displays the first interface, receiving, by the electronic device, a seventh operation of enabling a fifth function by the user;
in response to the seventh operation, switching, by the electronic device, the first interface to a seventh interface of a fourth application, and running the first task in a fourth view of the seventh interface, wherein a fifth activity at the stack top of the first task corresponds to the fifth function, and the first task is a child node of the fourth view, wherein
when the electronic device displays the seventh interface, the electronic device does not run the first task in the background, and the first task running in the first view when the electronic device displays the first interface runs in the fourth view.

8. The method according to any one of claims 1 to 7, wherein the first interface is displayed by the electronic device by running a fourth task of the second application; or
the first interface is displayed in a first window, the first window is created by a service of the second application, and the service of the second application runs in the background of the electronic device.

9. The method according to any one of claims 1 to 8, wherein the displaying, by the electronic device, a first interface of a second application, and running the first task in a first view of the first interface comprises:
creating, by the electronic device, a first window of the second application, and setting the first view in the first window, wherein the first interface is displayed in the first window;
setting, by the electronic device, the first task running in the background to run in the foreground, and starting the first activity in the first task; and
setting the parent node of the first task to the first view.

10. The method according to claim 9, wherein the setting, by the electronic device, the first task running in the background to run in the foreground comprises:
when first information is set in a first flag bit, setting, by the electronic device, the first task running in the background to run in the foreground, wherein the first information is used to indicate to start the first activity in a task reusing manner.

11. The method according to claim 9 or 10, wherein the method further comprises:
when the first task runs in the first view, receiving, by the electronic device, the second operation of enabling the second function by the user;
in response to the second operation, setting, by the electronic device, the second view in the first window, and removing the first view;
starting, by the electronic device, the second activity of the first application in the first task, wherein the second activity corresponds to the second function; and
setting, by the electronic device, the parent node of the first task to the second view from the first view.

12. The method according to any one of claims 9 to 11, wherein the method further comprises:
when the first task runs in the first view, running, by the electronic device, the second task of the third application in the background, and receiving, by the electronic device, the third operation of enabling the third function by the user;
in response to the third operation, setting, by the electronic device, the third view in the first window, and removing the first view;
setting, by the electronic device, the second task to run in the foreground, and starting the third activity of the third application in the second task, wherein the third activity corresponds to the third function;
setting, by the electronic device, the parent node of the first task to none, and returning the first task to the background for running; and
setting, by the electronic device, a parent node of the second task to the third view.

13. The method according to any one of claims 9 to 12, wherein the method further comprises:
when the first task runs in the first view, receiving, by the electronic device, the fourth operation of disabling the first function by the user; and
in response to the fourth operation, returning, by the electronic device, the first task to the background in a form of full-screen display for running, and setting the parent node of the first task to the default task display area from the first view.

14. The method according to any one of claims 9 to 12, wherein the method further comprises:
when the first task runs in the first view, receiving, by the electronic device, the fifth operation of disabling the second application by the user; and
in response to the fifth operation, returning, by the electronic device, the first task to the background for running, and setting the parent node of the first task to none from the first view.

15. The method according to claim 14, wherein the method further comprises:
when the electronic device runs the first task in the background, and the parent node of the first task is none, receiving, by the electronic device, the sixth operation of enabling the fourth function by the user; and
in response to the sixth operation, setting, by the electronic device, the first task running in the background to run in the foreground, starting the fourth activity of the first application in the first task, wherein the fourth activity corresponds to the fourth function, and setting the parent node of the first task to the default task display area from none.

16. The method according to any one of claims 9 to 15, wherein the method further comprises:
when the first task runs in the first view, receiving, by the electronic device, the seventh operation of enabling the fifth function by the user;
in response to the seventh operation, creating, by the electronic device, a second window of the fourth application, and setting the fourth view in the second window;
starting, by the electronic device, the fifth activity of the first application in the first task, wherein the fifth activity corresponds to the fifth function;
removing, by the electronic device, the first window; and
setting, by the electronic device, the parent node of the first task to the fourth view from the first view.

17. An electronic device, wherein the electronic device comprises one or more processors and a memory; the memory is coupled to the one or more processors; the memory is configured to store computer program code; the computer program code comprises computer instructions; and the one or more processors invoke the computer instructions to enable the electronic device to perform the method according to any one of claims 1 to 16.

18. A chip system, wherein the chip system is applied to an electronic device, the chip system comprises one or more processors, and the one or more processors are configured to invoke computer instructions to enable the electronic device to perform the method according to any one of claims 1 to 16.

19. A computer-readable storage medium, wherein the computer-readable storage medium comprises computer instructions, and when the computer instructions are run on an electronic device, the electronic device is enabled to perform the method according to any one of claims 1 to 16.

20. A computer program product, wherein the computer program product comprises computer program code, and when the computer program code is run on an electronic device, the electronic device is enabled to perform the method according to any one of claims 1 to 16.
